# EUROPEAN PATENT APPLICATION

(11) **EP 4 155 985 A1**
(43) Date of publication of application: **29.03.2023**
(21) Application number: 21809172.6
(22) Date of filing: 13.05.2021
(51) Int. Cl.: G06F 21/31

(54) **INFORMATION PROCESSING DEVICE, INFORMATION PROCESSING METHOD, AND COMPUTER PROGRAM**

(30) Priority: 22.05.2020 JP 2020089938
(71) Applicant: Sony Group Corporation, Minato-Ku, Tokyo, 108-0075 (JP)
(72) Inventor: KURATA Masatomo, Tokyo 108-0075 (JP); MATSUZAWA Sota, Tokyo 108-0075 (JP)
(74) Representative: MFG Patentanwälte Meyer-Wildhagen Meggle-Freund Gerhard PartG mbB
(86) International application number: PCT/JP2021/018283
(87) International publication number: WO 2021/235325

(57) **Abstract**

[Problem] Provided is an information processing device, an information processing method, and a computer program which enable highly accurate authentication.

[Means of Solution] An information processing device according to the present disclosure includes a position acquisition unit that acquires position information of a user; a feature amount calculation unit that calculates a feature amount of motion of the user based on sensor data detected by at least one sensor device; and an authentication processing unit that performs authentication processing for the user based on an authentication model corresponding to the position information and based on the feature amount.

## Description

### [Technical Field]

The present disclosure relates to an information processing device, an information processing method, and a computer program.

### [Background Art]

A variety of personal authentication methods for verifying the authenticity of a person are known such as possession authentication (something you have), memory authentication (something you know), and biometric authentication (something you are). Possession authentication is authentication using a thing such as a key that a person has, and there is a risk that the thing is lost or stolen. Memory authentication is authentication using information such as a password that a person memorizes, and there is a problem that it may be stolen or leaked, as in the possession authentication. There is also a problem that it has difficulty in memorizing. Biometric authentication is authentication using biometric features of a person, such as fingerprint authentication, face authentication, and vein authentication. Biometric authentication is superior in terms of security and usability, but has the problem of high cost. In addition, it requires a user action or operation such as pressing a finger against a sensor or looking into a camera.

As described above, conventional authentication methods require some user action or operation such as entering a password, taking out and showing a card, pressing a finger against a sensor, or looking into a camera.

Therefore, frictionless authentication, which identifies a person based on his/her natural behavior and actions in daily life, has attracted attention as authentication that does not require any user action or operation. There is known gait authentication as one type of frictionless authentication. Gait authentication is authentication focusing on the difference in the features of the way people walk. However, the accuracy of gait authentication is reduced in some cases depending on where a person walks because the way the person walks is affected by the characteristics or conditions of the road surface, authentication. Therefore, there is a need for robust authentication.

PTL 1 listed below discloses a technology of authenticating a user based on information received from a plurality of wearable devices worn by the user and the positions of the wearable devices. This technology makes it possible to authenticate the user from his/her routine motions without requiring any special action or operation. However, with this technology, there is a possibility that the accuracy of authentication will be reduced when the authentication is performed in a different environment from the environment where motions are performed to create an authentication model.

### [Citation List]

### [Patent Literature]

[PTL 1]
WO 2018/059962

### [Summary]

### [Technical Problem]

The present disclosure provides an information processing device, an information processing method, and a computer program which enable highly accurate authentication.

### [Solution to Problem]

An information processing device according to the present disclosure includes a position acquisition unit that acquires position information of a user; a feature amount calculation unit that calculates a feature amount of motion of the user based on sensor data detected by at least one sensor device; and an authentication processing unit that performs authentication processing for the user based on an authentication model corresponding to the position information and based on the feature amount.

An information processing method according to the present disclosure includes acquiring position information of a user; calculating a feature amount of motion of the user based on sensor data detected by at least one sensor device; and performing authentication processing for the user based on an authentication model corresponding to the position information and based on the feature amount.

A computer program according to the present disclosure causes a computer to execute the steps of: acquiring position information of a user; calculating a feature amount of motion of the user based on sensor data detected by at least one sensor device; and performing authentication processing for the user based on an authentication model corresponding to the position information and based on the feature amount.

### [Brief Description of Drawings]

[Fig. 1]

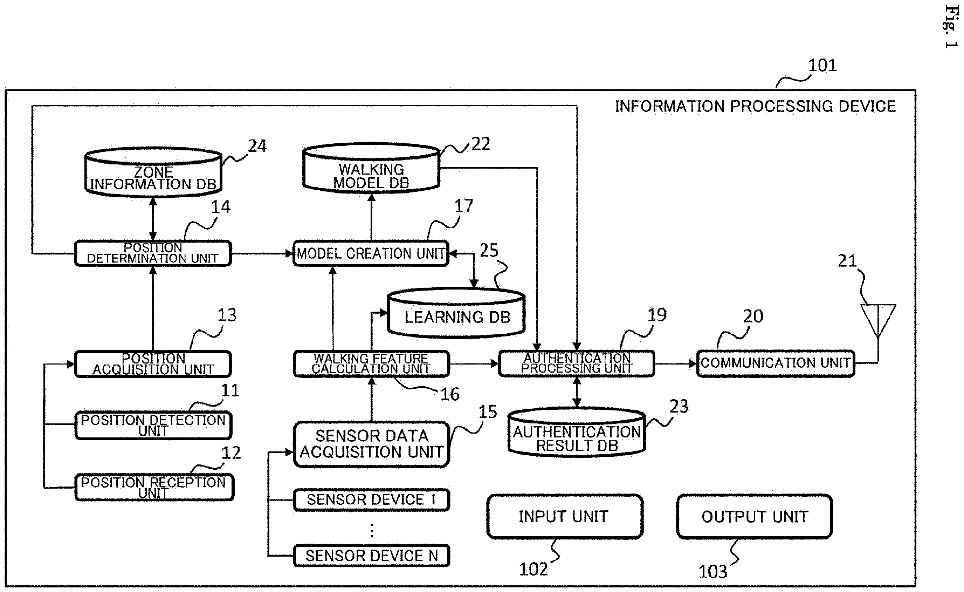

   Fig. 1 is a block diagram of an information processing device according to a first embodiment of the present disclosure.
[Fig. 2]

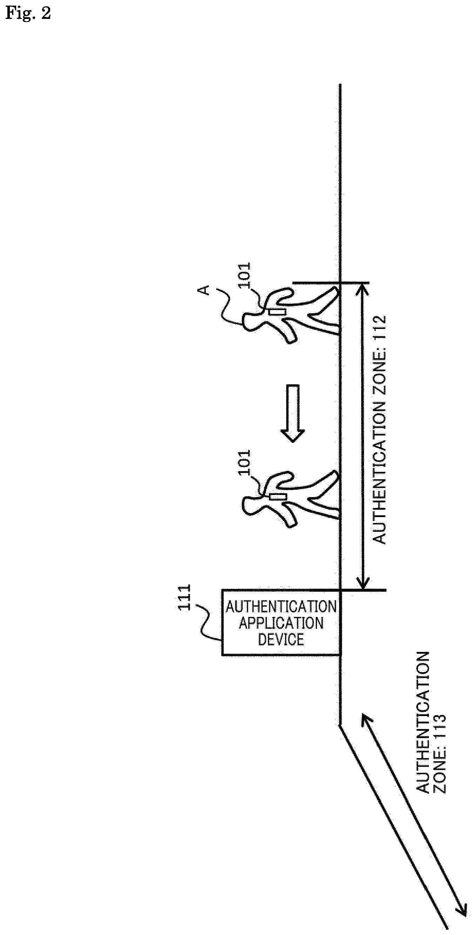

   Fig. 2 is a diagram illustrating a specific example of user authentication.
[Fig. 3]

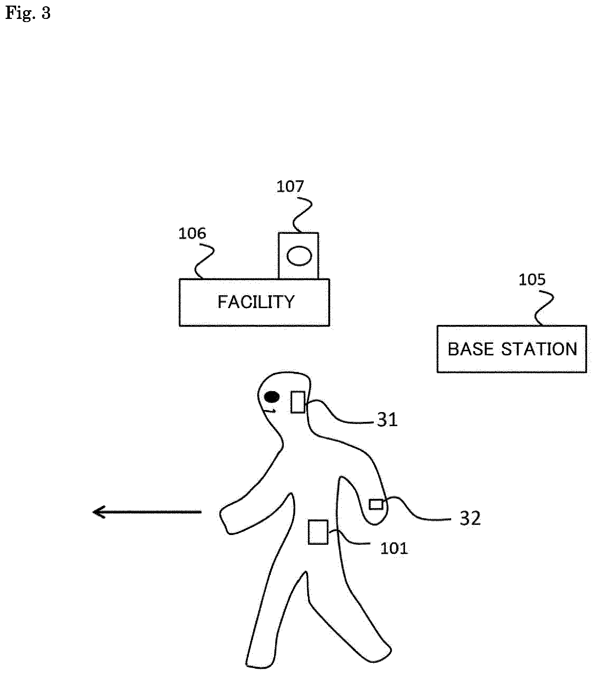

   Fig. 3 is a diagram illustrating a specific example of an operation of a position reception unit.
[Fig. 4]

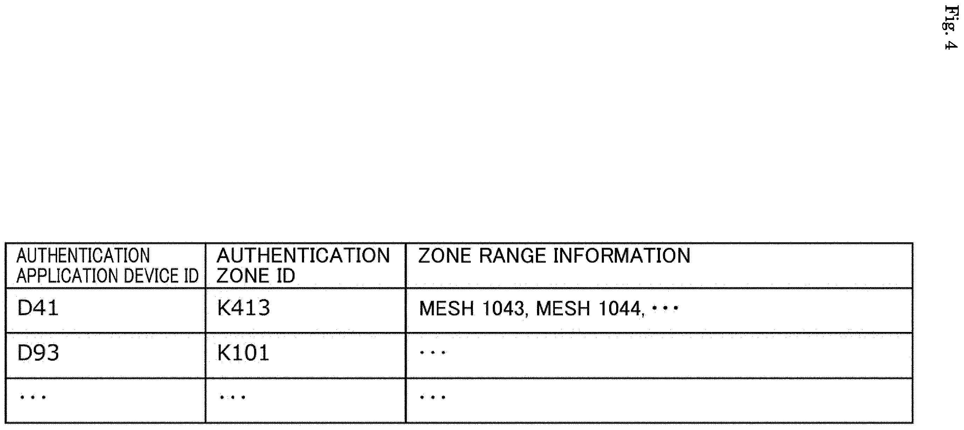

   Fig. 4 illustrates an example of a zone information DB.
[Fig. 5]

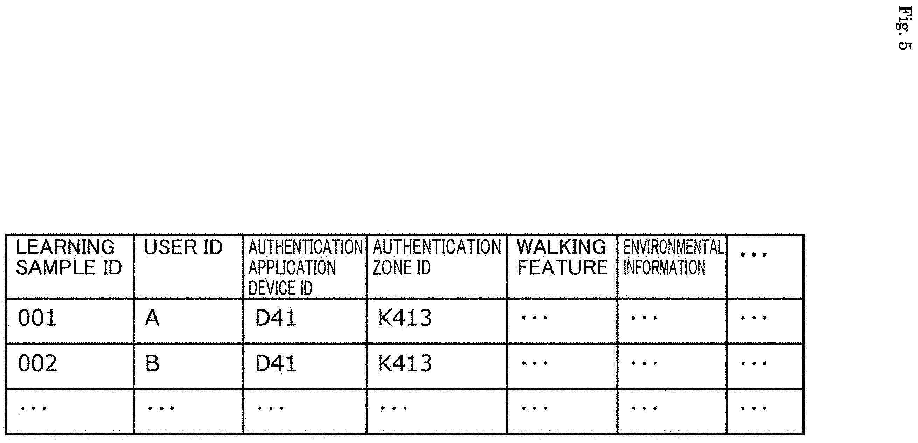

   Fig. 5 illustrates an example of a learning DB.
[Fig. 6]

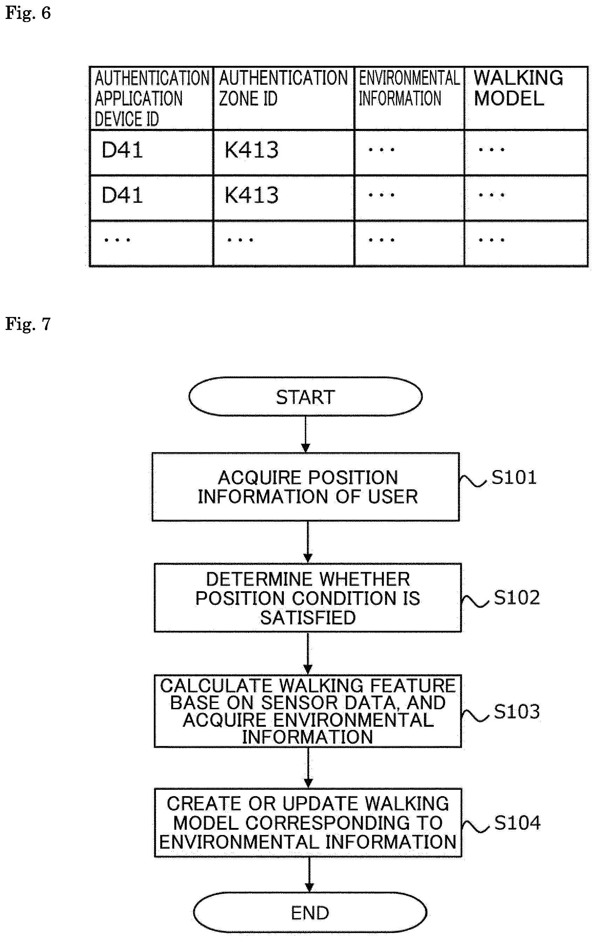

   Fig. 6 illustrates an example of a walking model DB.
[Fig. 7]
   Fig. 7 is a flowchart of an example of an operation of a learning phase in the information processing device.
[Fig. 8]

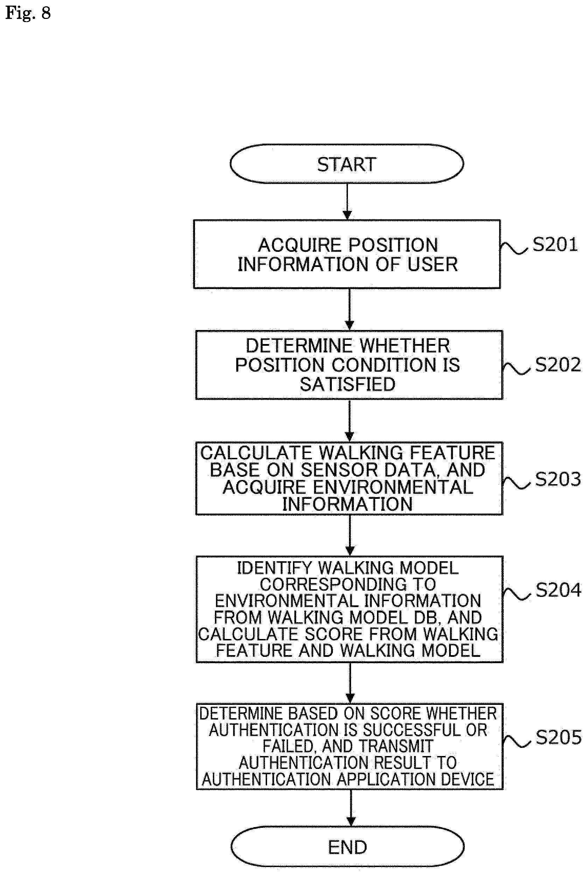

   Fig. 8 is a flowchart of an example of an operation of an authentication phase in the information processing device.
[Fig. 9]

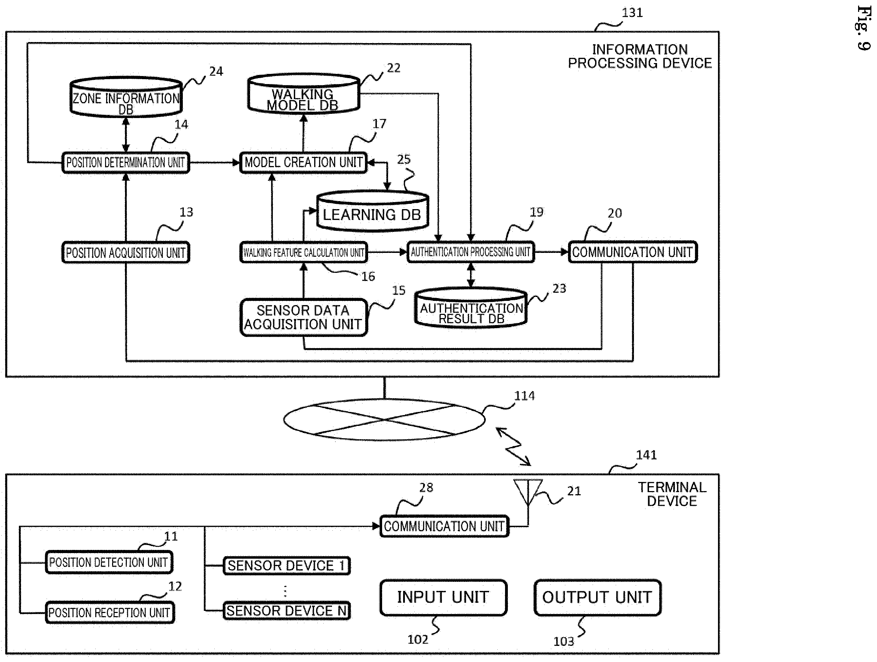

   Fig. 9 is a diagram illustrating an example of an information processing device and a terminal device according to a modification example of the first embodiment.
[Fig. 10]

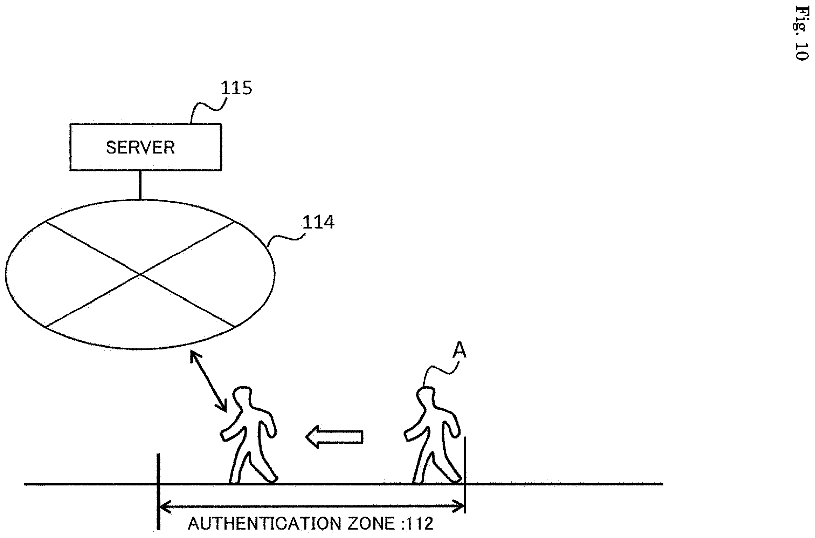

   Fig. 10 is a diagram illustrating an example in which an authentication application device is deployed as a server on a communication network.
[Fig. 11]

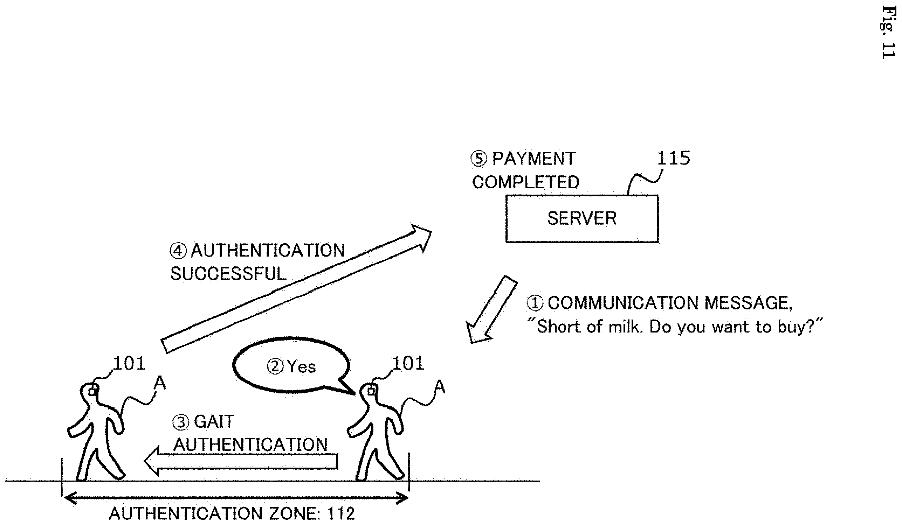

   Fig. 11 is a diagram illustrating an example in which personal authentication for payment is performed by way of Specific example 1.
[Fig. 12]

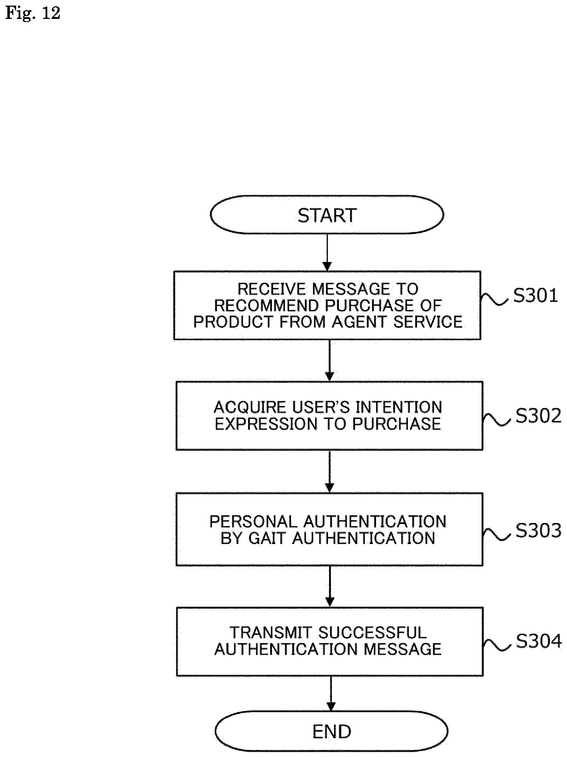

   Fig. 12 is a flowchart of an operation of an information processing device according to Specific example 1.
[Fig. 13]

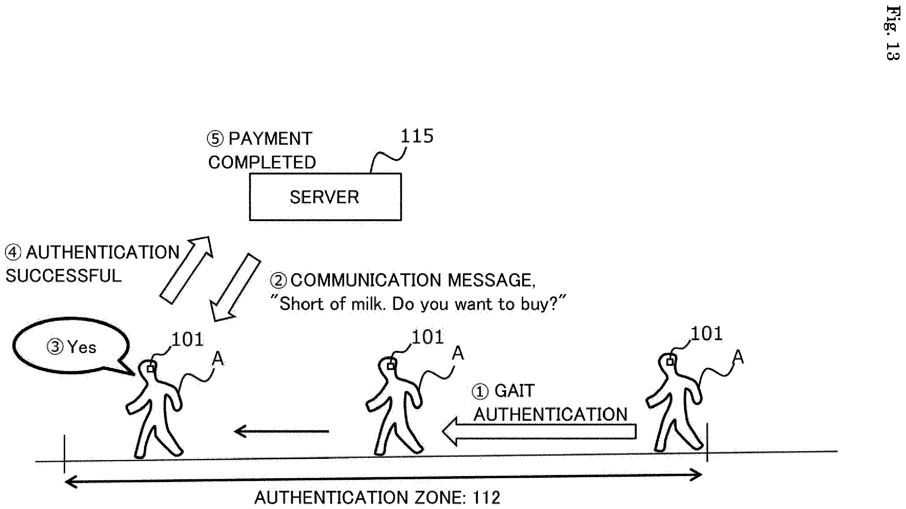

   Fig. 13 is a diagram for explaining Specific example 2.
[Fig. 14]

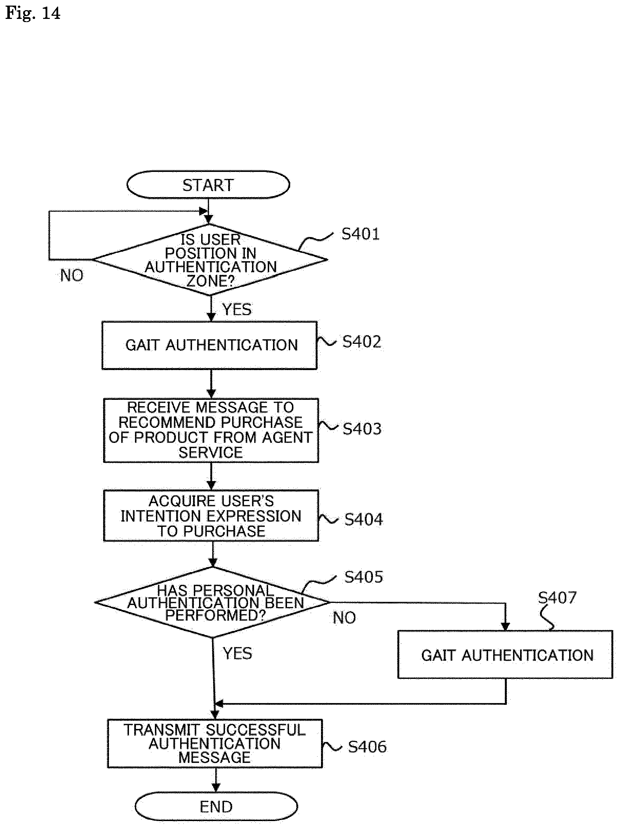

   Fig. 14 is a flowchart of an operation of an information processing device according to Specific example 2.
[Fig. 15]

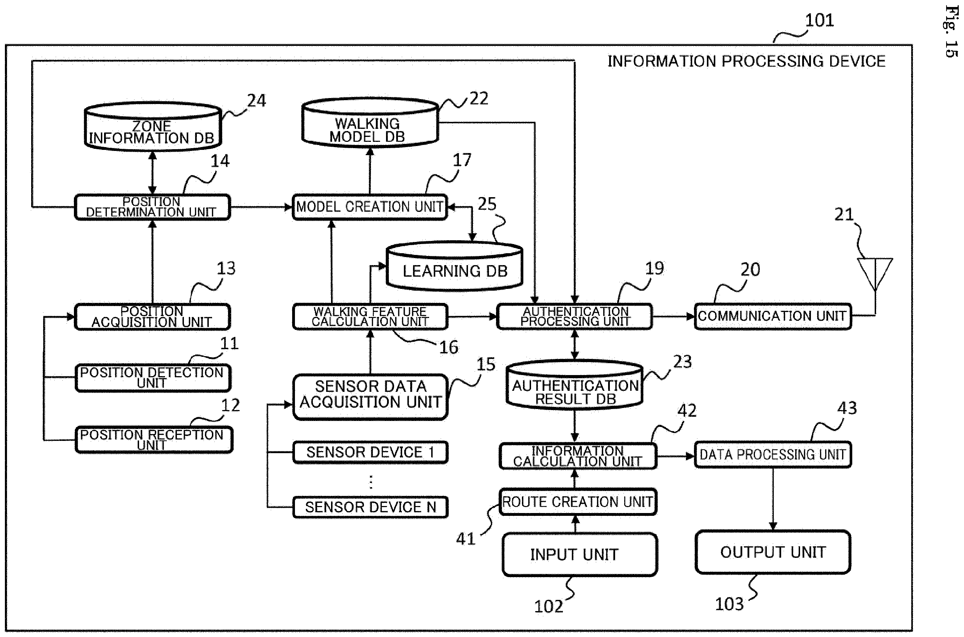

   Fig. 15 is a block diagram of an information processing device according to a second embodiment of the present disclosure.
[Fig. 16]

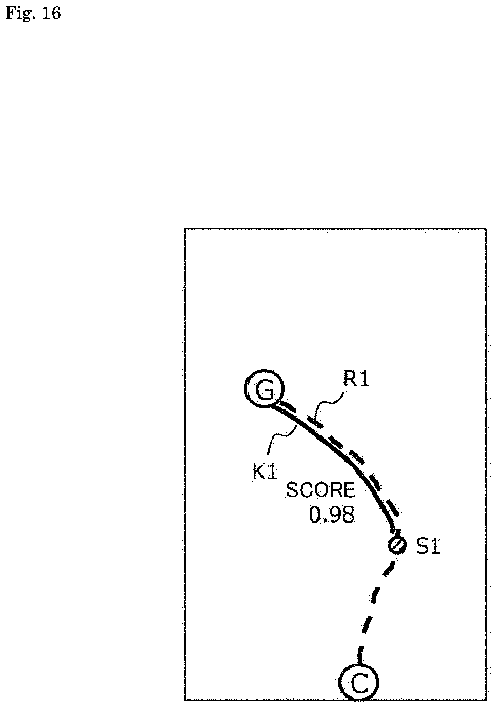

   Fig. 16 illustrates a display example of a screen of the information processing device.
[Fig. 17]

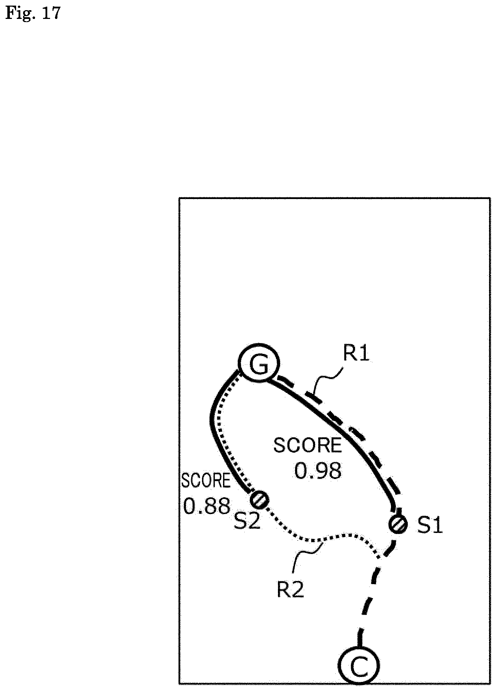

   Fig. 17 illustrates another display example of a screen of the information processing device.
[Fig. 18]

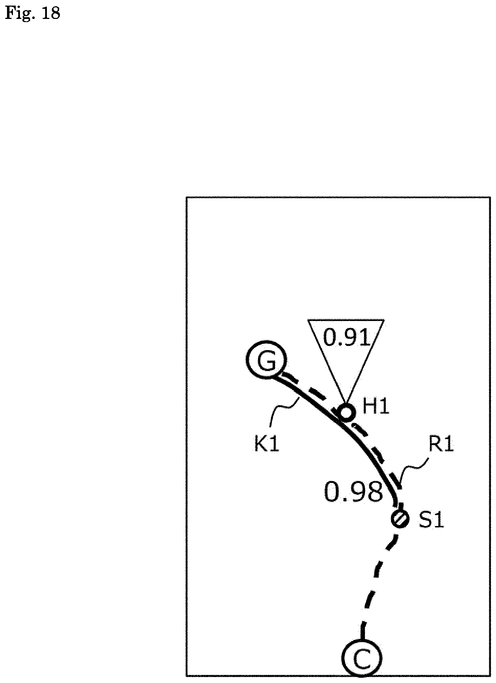

   Fig. 18 illustrates still another display example of a screen of the information processing device.
[Fig. 19]

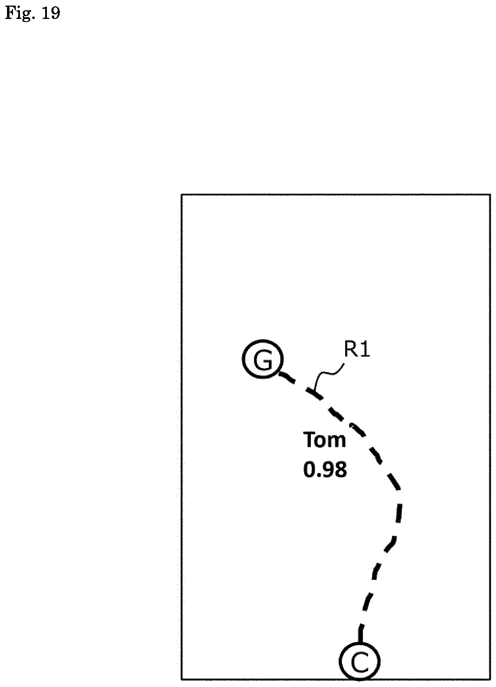

   Fig. 19 illustrates a display example of a screen according to a modification example of the second embodiment.
[Fig. 20]

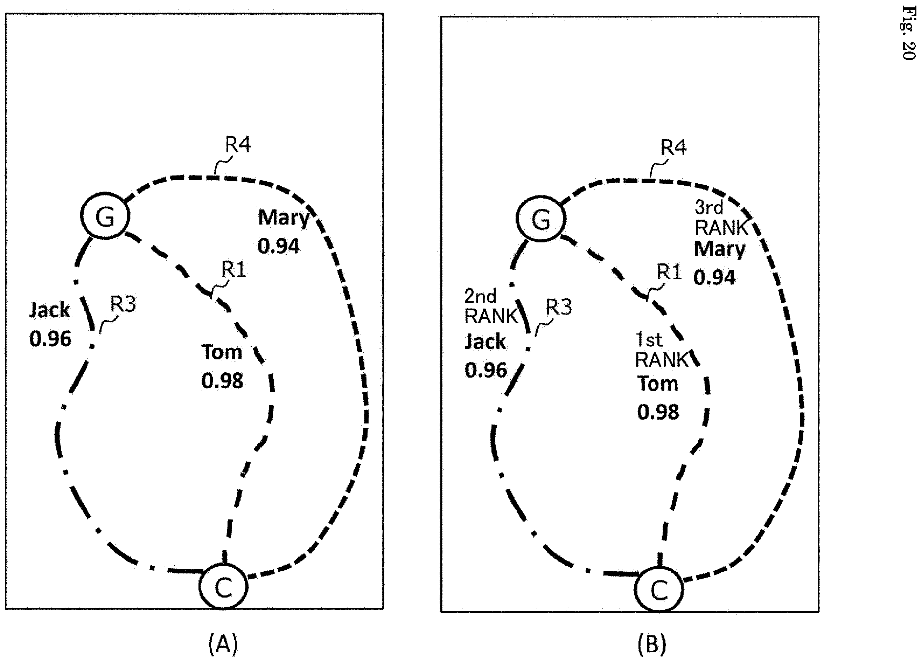

   Fig. 20 illustrates other display examples of a screen according to the modification example of the second embodiment.
[Fig. 21]

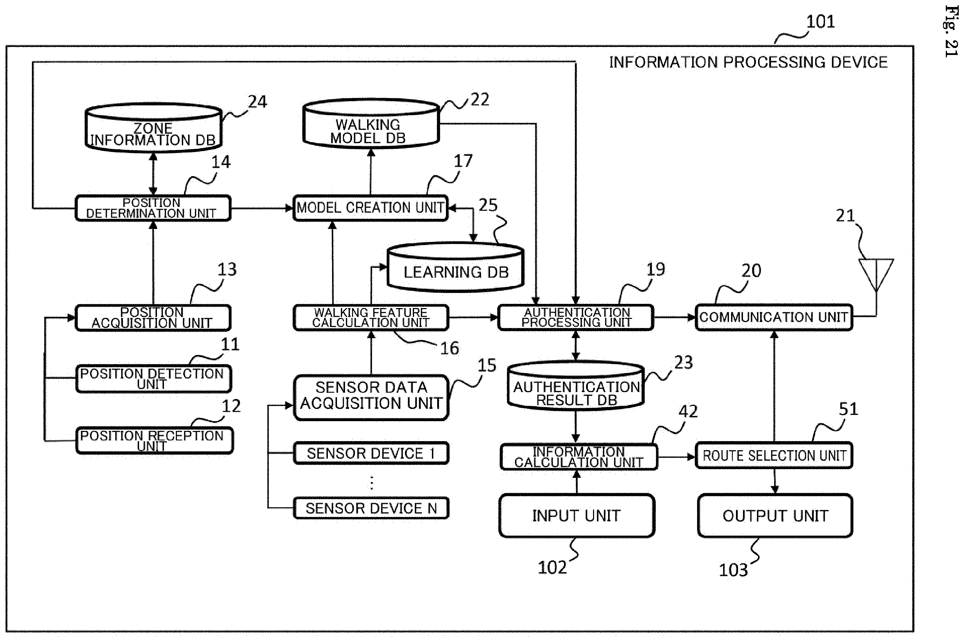

   Fig. 21 is a block diagram of an information processing device according to a third embodiment of the present disclosure.
[Fig. 22]

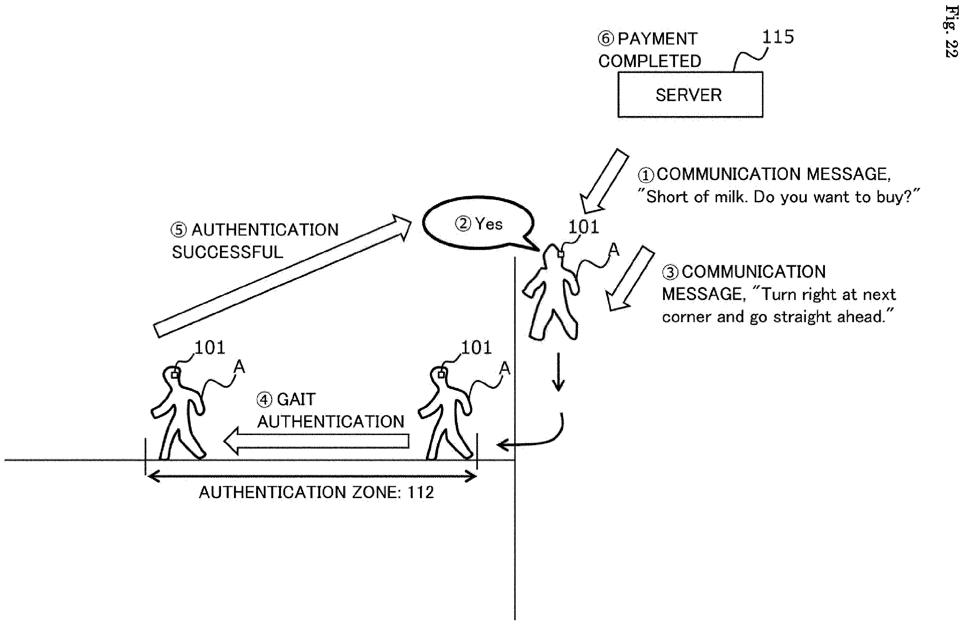

   Fig. 22 is a diagram illustrating a specific example in the present embodiment.
[Fig. 23]

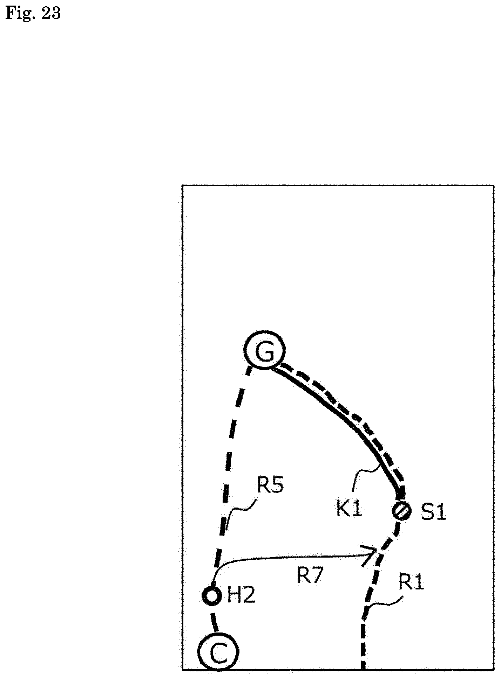

   Fig. 23 illustrates a display example of a screen of the information processing device.
[Fig. 24]

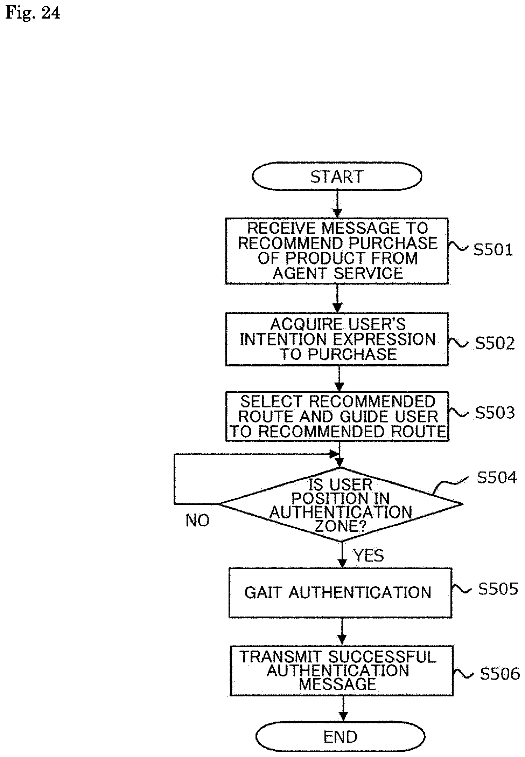

   Fig. 24 is a flowchart of an operation example of the information processing device according to the third embodiment.
[Fig. 25]

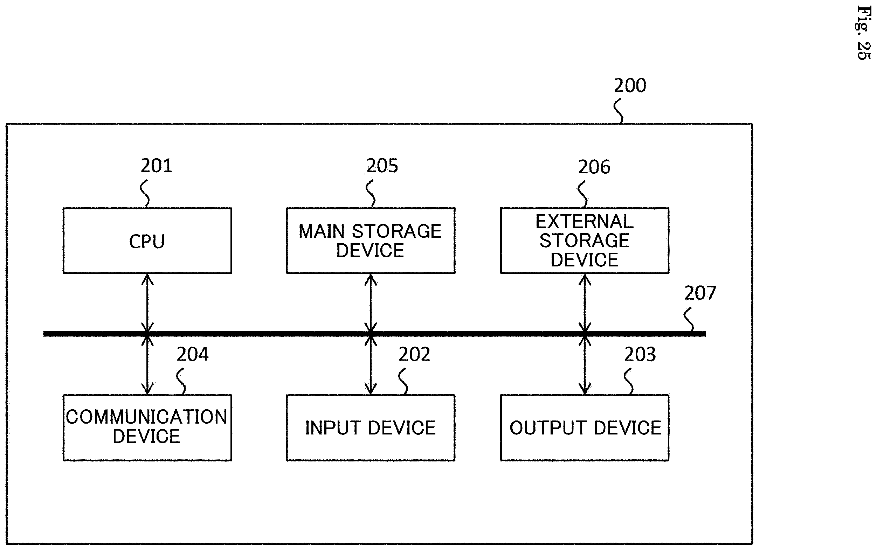

   Fig. 25 is a diagram illustrating an example of a hardware configuration of the information processing device according to the present disclosure.

### [Description of Embodiments]

Hereinafter, embodiments of the present disclosure will be described with reference to the drawings. It is to be understood that, in one or more embodiments presented in the present disclosure, elements included in each embodiment may be combined with each other and resultant objects combining such elements also constitute a part of the embodiments presented in the present disclosure.

Fig. 1 is a block diagram of an information processing device 101 according to a first embodiment of the present disclosure.

The information processing device 101 is a device to be carried or worn by a user who is traveling. Examples of the information processing device 101 include a smart phone, a wearable device, a mobile phone, a tablet, and a personal computer (PC). Examples of the PC include various types of PCs such as a laptop PCs and a desktop PC. Examples of the wearable device include a wristband-type device, a glasses/goggles-type device, an earphone-type device, a ring-type device, and a necklace-type device. However, the information processing device 101 and the wearable device are not limited to such examples. For example, the information processing device 101 may be any other device as long as it can be carried by a user who is traveling. The traveling of the user means traveling by foot, specifically walking or running. In the following, a case where the user walks will be described as an example unless otherwise specified.

Next, the outline of the information processing device 101 will be described. The information processing device 101 performs gait authentication, which is personal authentication focusing on the characteristics of motion of a user who is walking, with high accuracy without depending on the characteristics of a walking passage on which the user walks. The information processing device 101 has a learning phase and an authentication phase, and in the learning phase, a walking model, which is an authentication model used for user authentication, is created. An authentication zone is set in advance for authentication application devices, and it is detected that the user is located in the authentication zone based on position information of the user. A feature amount (walking feature) of walking motion of the user is calculated from sensor data acquired while the user walks in the authentication zone. A walking model for identifying the user is created based on the calculated walking feature. In the authentication phase, a walking feature is calculated based on sensor data acquired while the user walks in the authentication zone, and authentication processing (verification of whether the user is the authentic one) is performed on the user by using the calculated walking feature and the walking model created for the authentication zone. Such a use of the walking model corresponding to the authentication zone makes it possible to provide highly accurate authentication regardless of the characteristics of a walking passage on which the user walks.

Result information indicating that the user authentication is successful or failed is transmitted to an authentication application device, and the authentication application device performs processing according to the result information. For example, the authentication application device performs specific processing for successful authentication. Examples of the authentication application devices include a facility gate system, a storage cabinet, and a device that provide goods and services at any location or at a specific location. Examples of the facility gate system include a home entrance door, a flapper gate, a turnstile, and an office door. Examples of the storage cabinet include a shelve and a locker, for storing valuables and confidential items. Examples of the device that provide products and services include an electronic commerce (EC) site server, a vending machine, and a store payment device.

Examples of the specific processing for successful authentication include gate unlocking or key unlocking for a facility gate system, and key unlocking for a storage cabinet. For a device that provides products and services, examples of the specific processing include, for example, payment processing associated with the purchase of a product or a service on an EC site, product provision and payment processing by a vending machine, and a payment device for an unmanned store. Another example of service provision is a service that provides information to users. For example, health care-related personal information (calorie consumption, target weight, etc.) may be provided by voice or text at the midpoint or finish point of jogging. The above-listed examples of the authentication application devices and the specific processing to be performed for successful authentication are merely examples, and other examples may be included.

Fig. 2 illustrates a specific example of user authentication. Authentication zones 112 and 113 are set in the vicinity of an authentication application device 111 (here, a keyed door system) disposed along a walking passage. The authentication zone 112 is a flat road, and the authentication zone 113 is a slope. A user A is walking along a route that includes the authentication zone 112, and the information processing device 101 carried by a user A1 calculates a walking feature amount (walking feature) of the user A walking in the authentication zone 112 after the user A enters the authentication zone 112. User authentication is performed using the calculated walking feature and a learned walking model (authentication model). The information processing device 101 may be stored in a pocket of the user's clothes, held in the user's hand, housed in the user's bag, or worn on the body as a wearable device. The authentication zone is set according to any criteria, such as a zone in which the personal walking feature is likely to appear for the authentication application device, or a zone close to the authentication application device. The authentication zone is also set to have any length from the viewpoint of a length required to acquire the walking feature of a person.

The user A is authenticated successfully before arriving at the authentication application device 111, and the information processing device 101 transmits a message indicating a result of successful authentication to the authentication application device 111. The authentication application device 111 that has received the message of successful authentication unlocks the door. When the user A arrives at the authentication application device 111, the door is already unlocked, which allows the user to pass through the door (for example, go beyond the plane of the drawing sheet). The authentication application device 111 locks the door after confirming that the user has passed or after a certain period of time has elapsed. In this example, the authentication application device 111 unlocks the door at the time of the confirmation of successful authentication processing. As another example, the user may cause the authentication application device 111 to read the user's ID card to provide the user identification information (ID information), and then the authentication application device 111 may unlock the door only when the matching between the user whose ID card is read and the user for which authentication processing is successful is confirmed. There are possible many variations of conditions for the authentication application device 111 to perform a specific operation after the successful authentication processing for the user.

Although an example has been described in which the user A walks in the authentication zone 112, the same applies to the case where the user A walks in the authentication zone 113, which is a slope. In this case, for the authentication zone 113, a walking model different from that for the authentication zone 112 is learned in advance. For the user A who has entered the authentication zone 113, the information processing device 101 calculates a walking feature amount (walking feature) of the user A walking in the authentication zone 113, and authentication processing for the user is performed using the other learned walking model (authentication model).

Even if the feature of motion of the user A walking is different depending on whether it is for a flat road or a slope, it is possible to perform highly accurate user authentication (personal authentication) by using a walking model corresponding to the road. Although an example of the gradient of the road surface has been described as a characteristic of the walking passage, other characteristics may be included, for example, the type of road surface, such as asphalt pavement, gravel road, and grass.

The information processing device 101 according to the present embodiment will be described below in more detail.

The information processing device 101 in Fig. 1 includes a position detection unit 11, a position reception unit 12, a position acquisition unit 13, a position determination unit 14, sensor devices 1 to N (N is an integer of 1 or more), a sensor data acquisition unit (a motion acquisition unit and an environment acquisition unit) 15, a walking feature calculation unit (a feature amount calculation unit) 16, a model creation unit 17, an authentication processing unit 19, a communication unit 20, an antenna 21, a walking model database (DB) 22, an authentication result DB 23, a zone information DB 24, a learning DB 25, an input unit 102, and an output unit 103. In addition, the information processing device 101 includes a control unit (not illustrated) that controls these components.

The input unit 102 is an input device or an operation device through which a user of the information processing device 101 inputs instructions or data. The input unit is, for example, a touch panel, a sound input device (such as a microphone), a gesture input device, or any combination thereof. The gesture input device detects a gesture of the user by using a sensor, for example, and acquires an instruction or data according to the gesture.

The output unit 103 is an output device that outputs an instruction or data to the user of the information processing device 101. The output device is, for example, a display device (such as a liquid crystal display device or an organic EL display device), a sound output device (such as a speaker), a vibration device, a light emitting device, or any combination thereof.

The communication unit 20 uses the antenna 21 to transmit and receive signals. The communication unit 20 connects to a wireless communication network to communicate with an external device via the communication network. The communication network may be a local area network or a wide area network such as the Internet. Specific examples include, but are not limited to, a wireless LAN, a mobile network (4G or 5G network), Bluetooth, and the like. The communication unit 20 may be connected to a wired network.

The position detection unit 11 detects information (position information) related to the position of the user. As an example, the position detection unit 11 includes a Global Positioning System (GPS), and uses the GPS to detect longitude and latitude as position information. As another example, the position information may be a zone (authentication zone) in which the user is located.

The position reception unit 12 receives position information of the user from an external device through wireless communication.

Fig. 3 illustrates a specific example of an operation of the position reception unit 12. For example, it communicates with a base station (or access point) 105, for example, which serves as an external device in a wireless local area network (LAN), to receive a signal including position information of a user, which is estimated by the base station 105. Alternatively, information including the position of the user may be received from a cellular base station through a cellular communication network. The user is captured by a camera (imaging sensor) 107 installed in a facility 106 along the walking route of the user, and a distance to the captured user is calculated based on pre-calibrated camera parameters. A distance sensor such as a time-of-flight (TOF) sensor may be used instead of the camera. The position information of the user may be estimated from the position of the camera (or distance sensor) and the distance to the user. The position information estimated by such a device installed in the facility 106 is received by the position reception unit 12 through wireless communication. Alternatively, the position reception unit 12 may receive data necessary for calculation from the device installed in the facility 106, and the position acquisition unit 13 may estimate the position information of the user by using the received data.

The position reception unit 12 may receive position information of the user from a sensor device included in another device carried or worn by the user. For example, assume that the information processing device 101 is included in a smart phone and the user wears a wearable device with GPS (for example, a smart watch). In this case, the position information of the user may be received from the wearable device through Bluetooth (registered trademark), ultra-wideband (UWB), infrared communication, or the like. The example illustrated in Fig. 3 is an example in which the user wears the information processing device 101 and wearable devices 31 and 32 including at least one of a sensor and GPS. In this example, the wearable device 31 is a wristband-type device, and the wearable device 32 is an earphone-type device. The information processing device 101 may also be a wearable device.

The position acquisition unit 13 uses the position detection unit 11 or the position reception unit 12 to acquire the position information of the user. The position acquisition unit 13 may use at least one of the position detection unit 11 and the position reception unit 12 to receive a plurality of pieces of position information and use the average or median value of the received pieces of position information as the position information of the user.

The sensor devices 1 to N detect sensor data for identifying motion information of the user walking or environmental information related to walking. Examples of the sensor devices include an inertial sensor (an acceleration sensor, a gyro sensor), a velocity sensor, a magnetic sensor, an imaging sensor, a sound wave sensor, an infrared sensor, an environmental sensor, and a biometric sensor. Examples of the environmental sensor include a temperature sensor, a humidity sensor, an atmospheric pressure sensor, and the like. Examples of the biometric sensor include a pulse wave sensor, a pulse oximeter, a sweat sensor, a blood flow sensor, and the like. The above-listed examples of the sensor devices are merely examples, and other types of sensors may be used as long as they can detect the motion of the user or walking environment.

The sensor data acquisition unit 15 acquires sensor data from at least one of the sensor devices 1 to N, a sensor device included in another device carried or worn by the user, or an external device on the communication network. The sensor data acquisition unit 15 includes a motion acquisition unit that acquires the motion information of the user based on the sensor data, and an environment acquisition unit that acquires the environmental information of the user based on the sensor data.

An example is now described in which the sensor data acquisition unit 15 acquires sensor data from a sensor device included in another device carried or worn by the user. For example, assume that the information processing device 101 is included in a smart phone and the user wears a wearable device with a gyro sensor (for example, a smart watch). In this case, the sensor data may be received from the wearable device through Bluetooth (registered trademark), ultra-wideband (UWB), infrared communication, or the like. The sensor data may include position information of the other device. The other device may acquire position information in the same manner as the above-described manner for the position information of the user. Alternatively, the position reception unit 12 may make a local communication with the other device to calculate a relative position of the other device and provide the calculated relative position to the sensor data acquisition unit 15.

An example is now described in which the sensor data acquisition unit 15 acquires sensor data from an external device. The sensor data acquisition unit 15 acquires weather information at the user's position from, for example, a weather server serving as the external device (server). Alternatively, if weather information has already been acquired by an application of the information processing device 101, the weather information may be acquired from the application.

### <Learning phase>

The position determination unit 14 determines whether a position condition is satisfied based on the position information of the user. As an example, it is determined whether the user is located in the authentication zone set for the authentication application device, and if the user is located in the authentication zone, it is determined that the position condition is satisfied, and otherwise, it is determined that the position condition is not satisfied. For example, when it is detected that the user has entered the authentication zone, the position condition is satisfied. On the other hand, when it is detected that the user has left the authentication zone, the position condition is not satisfied. Other conditions may be involved in addition to whether or not the user is located in the authentication zone. For example, the user may input an instruction at the time when the user wishes to start learning, and the instruction having been input may be added as a requirement for satisfying the position condition. Alternatively, instruction data for starting learning may be received from an external device, and the instruction data having been received may be added as a requirement for satisfying the position condition.

The zone information DB 24 stores information related to authentication zones set for authentication application devices.

Fig. 4 illustrates an example of the zone information DB 24. The zone information DB 24 stores identification information of the authentication application devices (authentication application device IDs), identification information of the authentication zones (authentication zone IDs), and range information of the authentication zones. As an example, the range of an authentication zone may be specified by one or more meshes in map data which is sectioned into two-dimensional meshes of longitude and latitude. Alternatively, the range may be specified by a plurality of coordinates (longitude, latitude). Alternatively, the range may be specified by address. Alternatively, if the map data consists of a plurality of objects, an object may be specified corresponding to an authentication zone. Any combination of the above-described methods may be used. A map server on the communication network may be accessed via the communication unit 20 to acquire map data, and the range may be specified using the map data. Other methods may be used to specify the range.

The position determination unit 14 determines whether the position condition is satisfied for each authentication zone registered in the zone information DB 24. For example, it is determined whether the user has entered an authentication zone or left the authentication zone.

If the position condition is satisfied for a certain authentication zone (for example, when it is detected that the user has entered an authentication zone), the position determination unit 14 provides learning start information to the model creation unit 17. The learning start information includes, as an example, identification information of the authentication zone where the user has entered, and identification information of the authentication application device set for the authentication zone. If the position condition is no longer satisfied (for example, when it is detected that the user has left the authentication zone), the position determination unit 14 provides learning end information to the model creation unit 17. The learning end information includes, as an example, identification information of the authentication zone where the user has left, and identification information of the authentication application device set for the authentication zone.

When acquiring the learning start information from the position determination unit 14, the model creation unit 17 provides the walking feature calculation unit 16 with instruction data to instruct the calculation of a feature amount (walking feature) of the user. When acquiring the learning end information from the position determination unit 14, the model creation unit 17 provides instruction data to instruct the end of the calculation of the walking feature.

When receiving the instruction data for the calculation of a walking feature, the walking feature calculation unit 16 acquires the sensor data via the sensor data acquisition unit 15. The sensor data may be, for example, time-series signal waveforms, or discrete values acquired at regular time intervals. As described above, the sensor data acquisition unit 15 acquires sensor data from the sensor devices 1 to N, another wearable device worn by the user, an external device, or a combination thereof. When receiving the instruction data for the end of the calculation of the walking feature, the sensor data acquisition unit 15 stops the acquisition of the sensor data.

The walking feature calculation unit 16 uses the provided sensor data to calculate at least one feature amount (walking feature) for the user. The walking feature calculation unit 16 also acquires environmental information indicating the environment where the user walks (more specifically, the walking environment of the authentication zone) based on the provided sensor data. The sensor data to acquire the environmental information and the sensor data to calculate the walking feature may be the same or different. The walking feature calculation unit 16 provides the model creation unit 17 with the calculated walking feature of the user in association with the environmental information.

Examples of the walking feature include walking speed data, six-component data including 3-axis acceleration and 3-axis angular velocity, heart rate data as an example of biometric information, distance data indicating a distance between the information processing device 101 and the other wearable device, and a combination thereof. One sample or a plurality of samples may be acquired for a walking feature. For example, a plurality of samples for a walking feature are acquired on a certain time basis, a certain distance basis, or a sub-zone basis where an authentication zone is divided into a plurality of sub-zones. The pieces of data listed as examples are merely examples, and the data is not limited to a specific one as long as it is a feature that can be calculated from a variety of sensor data using the various types of sensors described above. A plurality of types of data may be combined, or an average of pieces of data may be calculated.

Any algorithm can be used as an algorithm for the walking feature calculation unit 16 to calculate a walking feature (feature calculation algorithm). For example, a neural network (for example, a deep neural network: DNN) can be used that estimates a walking feature from an input of sensor data. Alternatively, another algorithm may be used such as a function that receives an input of sensor data and outputs a walking feature.

An example of the environmental information is the condition of a road surface on which the user walks. Examples include a dry road, a wet road, and a snow-covered road. Another example of the environmental information is the type of footwear worn by the user. Examples include leather shoes, high heels, low heels, sneakers, boots, and sandals. It is expected that different footwear will result in a different way of walking of the user. Another example of the environmental information is weather. Examples include weather (sunny, cloudy, rainy, snowy, typhoon), temperature, humidity, and any combination thereof. The pieces of environmental information listed as examples are merely examples, and the data is not limited to a specific one as long as it can be calculated from a variety of sensor data using the various types of sensors described above. A plurality of types of environmental information may be combined.

The walking feature calculation unit 16 does not need to continue to acquire sensor data while the position condition is satisfied (for example, while the user is located in the authentication zone). For example, the acquisition of sensor data may be stopped when a number of samples required to calculate a walking feature is acquired.

The model creation unit 17 associates the walking feature and the environmental information with the authentication zone ID and the authentication application device ID which are included in the learning start information, sets the resulting set of data as learning sample data, and stores the learning sample data in the learning DB 25. The learning sample data may further include additional information such as at least one of a user ID for identifying the user, a learning sample ID for identifying the learning sample data, and the current time.

The learning DB 25 may store learning sample data for one or more other users in addition to the learning sample data of the user of interest. The learning sample data of other users may be downloaded in advance from an external server and stored in the learning DB 25.

Fig. 5 illustrates an example of the learning DB 25. In this example, sample IDs, user IDs, authentication application device IDs, authentication zone IDs, walking features, environmental information, and the like are included.

The model creation unit 17 identifies, as teacher data for each piece of environmental information, pieces of learning sample data including the same authentication zone and the same authentication application device ID from the learning DB 25. The model creation unit 17 creates a walking model, which is an authentication model corresponding to the position information of the user (in this example, the authentication zone where the user is located) by machine learning using the teacher data. The created walking model is stored in the walking model DB in association with the authentication zone, the environmental information, and the like.

As an example of a walking model, there is a regression model that regresses the degree of certainty that a user is the same authentic one from the walking feature. As a specific example of the regression model, a neural network (for example, DNN) can be used that receives an input of a walking feature and outputs a degree of certainty. In addition, a nonlinear regression model, a support vector machine (SVM), and the like may be used. The degree of certainty is a score representing the probability that the result of authentication processing is correct (probability that a person is the same person). The score has a value of 0 or more and 1 or less, for example. As an example, the higher the value, the higher the probability that the person is the same person. The range of the scores is not limited to a range of 0 or more and 1 or less, and may be any range as determined. The score may be expressed in units such as percent, or may be binary (for example, 0 and 1). The score may also represent a rank or a class.

Although an example of supervised learning using learning sample data of other users in addition to the learning sample data of the user of interest has been described, a model may be created by unsupervised learning using only the learning sample data of the user of interest. Examples of such a model include the K-nearest neighbor method, local outlier factor (LOF), and the like. The walking model may be a set of the walking feature of the user and a threshold value. In this case, whether or not the user is authentic (whether the user is the same person) can be determined based on whether or not the distance between the walking feature to be evaluated and the walking feature included in the walking model is equal to or less than a threshold value.

In the following description, the walking model is a neural network that receives an input of a walking feature and outputs a score. However, other types of models can also be used.

The model creation unit 17 creates a walking model for each piece of environmental information. For example, if the environmental information is the type of footwear of the user, a walking model corresponding to the type of footwear is created. If the environmental information is weather, a walking model corresponding to the type of weather is created. As a result, a plurality of walking models corresponding to the respective pieces of environmental information are created for the same authentication zone.

The model creation unit 17 may create a walking model on condition that a predetermined number or more of pieces of learning sample data have been accumulated. The predetermined number may be one or more. The model creation unit 17 may update or recreate the walking model each time learning sample data of the user is stored in the learning DB 25 (that is, each time the user walks in the same authentication zone).

Fig. 6 illustrates an example of the walking model DB. That example includes authentication application device IDs, authentication zone IDs, environmental information, walking model data, and so on. The content of the walking model data depends on the type or kind of walking model. For example, if the walking model is a neural network, parameters for the neural network (for example, weight coefficients for links connecting nodes) are included.

### <Authentication phase>

The position determination unit 14 determines whether the position condition is satisfied for each of the authentication zones registered in the zone information DB 24 based on the position information of the user. As an example, it is determined whether the user is located in one of the authentication zones. For example, when the user is located in one of the authentication zones, the position condition is satisfied, and when the user is not located in any authentication zone, the position condition is not satisfied. For example, when it is detected that the user has entered an authentication zone, the position condition is satisfied. On the other hand, when it is detected that the user has left the authentication zone, the position condition is not satisfied.

To determine whether the position condition is satisfied, other conditions may be involved in addition to whether or not the user is located in the authentication zone. For example, the user may input an instruction at the time when the user wishes to start authentication, and the instruction having been input may be added as a requirement for satisfying the position condition. Alternatively, instruction data for starting authentication may be received from an external device, and the instruction data having been received may be added as a requirement for satisfying the position condition.

If the position condition is satisfied (for example, when it is detected that the user has entered an authentication zone), the position determination unit 14 provides authentication start information to the authentication processing unit 19. The authentication start information includes, as an example, identification information of the authentication zone in which the user is located, and identification information of the authentication application device set for the authentication zone. If the position condition is no longer satisfied (for example, when it is detected that the user has left the authentication zone), the position determination unit 14 provides authentication end information to the authentication processing unit 19. The authentication end information includes, as an example, identification information of the authentication zone where the user has left, and identification information of the authentication application device set for the authentication zone.

When acquiring the authentication start information from the position determination unit 14, the authentication processing unit 19 provides the walking feature calculation unit 16 with instruction data to instruct the calculation of a walking feature. When acquiring the authentication end information from the position determination unit 14, the authentication processing unit 19 provides instruction data to instruct the end of the calculation of the walking feature.

When receiving the instruction data to instruct the calculation of a walking feature, the walking feature calculation unit 16 acquires sensor data associated with the authentication zone in which the user is located from at least one of the sensor devices 1 to N via the sensor data acquisition unit 15. Sensor data may be acquired from another wearable device worn by the user or an external device. The walking feature calculation unit 16 calculates at least one walking feature based on the acquired sensor data. Details of the calculation of a walking feature are the same as in the learning phase. The walking feature calculation unit 16 also acquires environmental information of walking based on the acquired sensor data. Details of the acquisition of environmental information are the same as in the learning phase. The walking feature calculation unit 16 provides the authentication processing unit 19 with the walking feature in association with the environmental information.

The walking feature calculation unit 16 does not need to continue to acquire sensor data while the position condition is satisfied (for example, while the user is located in the authentication zone). For example, the acquisition of sensor data may be stopped when the data required to calculate a walking feature is acquired. As will be described later, the authentication processing may be performed multiple times for the authentication zone. In this case, it is necessary to acquire sensor data during at least the period of time required to calculate walking features for the number of times the authentication processing is performed.

The authentication processing unit 19 acquires a corresponding walking model from the walking DB 22 based on the identification information of the authentication zone and the identification information of the authentication application device, which are specified in the authentication start information, and the environmental information provided from the walking feature calculation unit 16. The walking feature provided from the walking feature calculation unit 16 is used as an input for the walking model to perform authentication processing for the user. Specifically, a score is acquired as an output of the walking model, and the score is compared with a threshold value. If the score is equal to or greater than the threshold value, it is determined that the authentication processing is successful. Accordingly, it is determined that the user of the information processing device 101 is authentic. If the score is less than the threshold value, it is determined that the authentication processing failed.

The authentication processing unit 19 stores the score in the authentication result DB 23 as authentication result data in association with the authentication zone, the device identification information, the result of the authentication processing (successful or failed), the user ID, and the current time. The authentication processing unit 19 may perform the authentication processing for the authentication zone multiple times. In other words, the calculation of a score and the determination of whether the authentication processing is successful or failed may be performed multiple times. For example, the authentication processing is performed at fixed time intervals such as every minute. It may be determined that the personal authentication is successful if even one of the multiple attempts of authentication processing is successful, or it may be determined that the personal authentication is successful if a predetermined number (two or more) of attempts of authentication processing is successful. It may be determined that the personal authentication is successful if the authentication processing is successful with a predetermined percentage of the predetermined number of attempts.

The communication unit 20 transmits result information of the authentication processing to the authentication application device. The result information of the authentication processing includes, for example, the user ID and the result of the authentication processing (successful or failed). The result information of the authentication processing may include other information (for example, the identification information or environmental information of the authentication zone).

The address of the authentication application device to which the result information is transmitted is stored in any storage unit included in the information processing device 101 or in an external storage device accessible from the information processing device 101, in association with the authentication application device. The external storage device may be a storage medium such as a USB memory or a memory card. The address of the authentication application device may be stored in the zone information DB 24 or the walking model DB. Alternatively, the address of the authentication application device may be identified from a communication message received from the authentication application device.

The authentication processing unit 19 provides the result of the authentication processing to the output unit 103. The output unit 103 outputs the result of the authentication processing, so that the user of the information processing device 101 can confirm whether the authentication is successful. For the output unit 103 being a display device, it displays text indicating that the authentication processing is successful or failed, and for the output unit 103 being a sound device, it notifies the user of successful or failed authentication processing by voice. In addition, depending on the form of the output unit 103, the output unit 103 may notify the user of successful or failed authentication processing by vibration or light emission. For example, successful or failed may be notified by a vibration pattern, a color of light emission, or a blinking pattern. The result of the authentication processing may be transmitted to a device installed in the facility (for example, an authentication application device or a roadside device near the user's position), and the result of the authentication processing may be output by the device installed in the facility. As a method of outputting it, a method similar to that of the output unit 103 can be used. The user can confirm the result of the authentication processing through the device installed in the facility. Alternatively, it is possible to not notify either the user or the facility device of the result of the authentication processing.

Fig. 7 is a flowchart of an example of an operation of the learning phase in the information processing device 101. The position acquisition unit 13 acquires position information of a user by using at least one of the position detection unit 11 and the position reception unit 12 (S101).

The position determination unit 14 determines whether the position condition is satisfied based on the position information of the user (S102). For example, it is determined whether or not an authentication zone including the position information of the user is included in the authentication zones stored in the zone information DB 24. If such an authentication zone (target authentication zone) is included, it is determined that the position condition is satisfied, and otherwise, it is determined that the position condition is not satisfied.

If the position condition is satisfied, the walking feature calculation unit 16 uses the sensor data acquisition unit 15 to acquire sensor data. The walking feature calculation unit 16 calculates a walking feature by using the acquired sensor data (S103). It also acquires environmental information based on the acquired sensor data (S103). The sensor data for acquiring environmental information and the sensor data for calculating a walking feature may be the same or different.

The model creation unit 17 creates learning sample data in which the calculated walking feature is associated with the environmental information, the target authentication zone, and the authentication application device for which the target authentication zone is set, and stores the learning sample data in the learning DB 25. For the case where a plurality of samples for a walking feature are acquired, a plurality of pieces of learning sample data are stored. The model creation unit 17 creates a walking model (authentication model) for identifying the user by machine learning, for example, based on the learning sample data in the learning DB 25 (S104). The created walking model is stored in the walking model DB 22. If the walking model is already stored in the walking model DB 22, the walking model is updated.

Fig. 8 is a flowchart of an example of an operation of the authentication phase in the information processing device 101. The position acquisition unit 13 acquires position information of a user by using at least one of the position detection unit 11 and the position reception unit 12 (S201).

The position determination unit 14 determines whether the position condition is satisfied based on the position information of the user (S202). For example, it is determined whether or not an authentication zone including the position information of the user is included in the authentication zones set for the authentication application device in the walking model DB. If such an authentication zone (target authentication zone) is included, it is determined that the position condition is satisfied, and otherwise, it is determined that the position condition is not satisfied.

If the position condition is satisfied, the walking feature calculation unit 16 uses the sensor data acquisition unit 15 to acquire sensor data, and calculates a walking feature by using the acquired sensor data (S203). The walking feature calculation unit 16 also acquires environmental information based on the acquired sensor data (S203). The sensor data for acquiring environmental information and the sensor data for calculating a walking feature may be the same or different.

The authentication processing unit 19 identifies a walking model corresponding to the target authentication zone and the environmental information from the walking model DB, and calculates a score with respect to an input of the walking feature calculated in step S203 (S204). If the score is equal to or greater than a threshold value, the authentication processing unit 19 determines that the user is the same person and determines that the authentication processing is successful. On the other hand, if the score is less than the threshold value, it determines that the user is not the same person and determines that the authentication processing failed. The authentication processing unit 19 uses the communication unit 20 to transmit the result information of the authentication processing to the authentication application device for which the target authentication zone is set (S205). The authentication application device performs specific processing according to the result information of the authentication processing. For example, for the authentication application device being an entrance gate system, the gate is unlocked.

In the description with reference to Fig. 7 and Fig. 8, whether or not the position condition is satisfied is determined based on whether or not the position information of the user is included in one of the plurality of authentication zones. On the other hand, if an authentication application device on which user authentication is to be performed is decided in advance, whether or not the position condition is satisfied may be determined based on whether or not the position information of the user is included in the authentication zones set for that authentication application device. For example, the user may specify a destination by using the input unit 102 and determine the authentication application device closest to the destination as the target authentication application device. Information on the position where the authentication application device is located may be stored in the zone information DB 24, the walking model DB, or any other storage unit.

As described above, according to the present embodiment, a walking model corresponding to an authentication zone set for an authentication application device is created based on a feature amount (walking feature) of a user who walks in the authentication zone. When the user walks in the authentication zone, the walking feature of the user is calculated, and authentication processing for the user is performed based on the acquired walking feature and the learned walking model. As a result, even if the characteristics of the road surface in the authentication zone is different depending on each authentication application device, the user authentication can be performed with high accuracy.

According to the present embodiment, environmental information indicating the walking environment in the authentication zone is acquired, and the walking model is registered in association with the environmental information. At the time of the authentication processing, environmental information indicating the walking environment in the target authentication zone is acquired, and the walking model corresponding to the acquired environmental information is used. As a result, even in the same authentication zone, different walking models can be used for the walking environment (conditions of the road surface, footwear of the user, etc.) varying depending on time, and the authentication processing for the user can be performed with high accuracy.

In the present embodiment, the feature amount of a walking motion (walking feature) is calculated as the feature amount of a motion of the user, but the feature amount of a running motion may be calculated. For the case where the user travels by bicycle, the feature amount of a motion of the user during traveling may be calculated. In addition, a feature amount of any motion of the user may be calculated.

### (Modification example)

In the first embodiment, an aspect has been described in which the information processing device 101 is carried or worn by a user. However, one or some of the components included in the information processing device 101 may be deployed on the communication network as an information processing device 131, and the remaining components may be included in a terminal device carried or worn by the user.

Fig. 9 is a diagram illustrating an example of the information processing device 131 and a terminal device 141 according to a modification example. The information processing device 131 is deployed as an information processing server in a communication network 114 such as the Internet. The terminal device 141 is a device such as a smart phone or a wearable device that is carried or worn by a user. The communication unit 20 of the information processing device 131 and the communication unit 28 of the terminal device 141 can communicate with each other. Each block in the information processing device 131 and the terminal device 141 corresponds to the block with the same reference numeral in Fig. 1 and performs the same or substantially the same operation. The communication unit 28 of the terminal device 141 transmits data detected by the sensor devices 1 to N, data detected by the position detection unit 11, and data received by the position reception unit 12 to the information processing device 101. The communication unit 20 of the information processing device 101 provides the data received from the terminal device 141 to the position acquisition unit 13 and the sensor data acquisition unit 15 according to the type of the received data.

The information processing device 131 being deployed on the communication network 114 in this manner makes it possible to provide a gait authentication service as a cloud service to the user. In addition, the configuration of the terminal device 141 can be simplified. In the following description, instead of the information processing device 101, the information processing device 131 of the present modification example can also be used.

### (Specific example 1)

In the example illustrated in Fig. 2 of the first embodiment, the authentication application device 111 is disposed along a walking passage of the user. However, the authentication application device may be disposed anywhere as long as the authentication application device can communicate with the information processing device 101. For example, for the authentication application device being an EC site, the authentication application device is deployed on a communication network such as the Internet.

Fig. 10 illustrates an example in which the authentication application device is a server deployed on the communication network. When a user A is successfully authenticated for the authentication zone 112, the information processing device 101 accesses a server 115 via the communication network 114 and transmits a result notification of successful authentication to the server 115.

Fig. 11 illustrates an example in which personal authentication for payment processing is performed in the server 115 by way of Specific example 1. A user A is walking and wears a hearable device as a wearable device including the information processing device 101 on the ear. As an agent service, the server 115 deployed on the communication network transmits a message to recommend the purchase of a product (pushes a notification) to the information processing device 101 of the user A. For example, the server 115 remotely monitors a user A's refrigerator at home, and upon detecting that the refrigerator is short of a certain food or drink, transmits a message to recommend the purchase of the missing food or drink to the user. In the example as illustrated, the message "Short of milk. Do you want to buy?" is transmitted to the information processing device 101.

The user A confirms the message from server 115 by voice from the output unit 103 (speaker) of the information processing device 101. The user A inputs the message "Yes" from the input unit 102 (microphone) of the information processing device 101. The input unit 102 has a voice recognition function, which analyzes text voice-recognized and determines that the user A has expressed an intention to purchase milk. The information processing device 101 identifies the authentication zone 112 set for the server 115, and upon detecting that the user A has entered the authentication zone 112, performs the authentication processing (gait authentication) for the user A. When the authentication processing is successful, the communication unit 20 of the information processing device 101 transmits a message of successful authentication to the server 115. When receiving the message of successful authentication, the server 115 completes the payment processing for the user A to purchase milk. In this example, a response is transmitted using voice recognition to a recommendation message from the server 115. However, a response may be transmitted by, for example, a method of selecting "Yes" or "No" by touching a screen or a method of pressing a button for "Yes" or "No".

Fig. 12 is a flowchart of an operation of the information processing device 101 according to Specific example 1. The communication unit 20 receives the message to recommend the purchase of a product from the agent service of the server 115 (S301). The output unit 103 outputs the received message by voice or text, and the user who has confirmed the message uses the input unit 102 to express an intention to purchase it (S302). The purchase intention is expressed by voice input, touch panel input, or the like, for example. The position determination unit 14 detects that the user has entered the authentication zone set for the server 115. Then, the authentication processing unit 19 performs the authentication processing (gait authentication) for the user by using the walking feature of the user based on the sensor data and by using the walking model corresponding to the authentication zone in which the user is located (S303). When the authentication processing is successful, the communication unit 20 transmits a message to notify the server 115 of product purchase and successful authentication (S304). The server 115 performs payment processing for the user A to purchase the product. If the authentication processing fails in step S303, the processing ends. In this case, the output unit 103 may output information notifying that the authentication processing failed to the user. In the present specific example, the server 115 performs the payment processing. However, if a payment service app is registered in the information processing device 101, the information processing device 101 may be configured to perform the payment processing. In this case, the authentication processing unit 19 may provide a message of successful authentication to the payment service app.

As described above, according to Specific example 1, when the user receives a push notification to purchase a product from the agent service while walking, the user can be authenticated only by expressing an intention to purchase the product. In other words, the user does not need to speak a password or a PIN code for personal authentication, or speak for voiceprint authentication. Therefore, there is no risk of leakage of passwords and the like due to speech, and problems such as deterioration of accuracy of voiceprint authentication due to noise in the surroundings do not occur. In addition, the user does not have to perform any special operation for personal authentication, so that the burden on the user is reduced. In Specific example 1, an example in which the user walks outdoors is described. However, the place where the user walks is not limited to outdoors, and may be indoors. The same applies to Specific example 2, a second embodiment, and a third embodiment, which will be described later.

### (Specific example 2)

In Specific example 1, authentication is performed after the purchase of a product is recommended. By contrast, in Specific example 2, authentication processing is performed in advance. When a recommendation to purchase a product is made and the user expresses an intention to purchase it, that is, when it becomes necessary to perform authentication processing, it is determined that authentication processing has been completed and then a message of successful authentication is returned without performing authentication processing again. As a result, it possible to complete the payment processing quickly. Specific example 2 will be described below in detail.

Fig. 13 illustrates a specific example of Specific example 2. The description will focus on the points different from Specific example 1. When the information processing device 101 detects that a user A has entered the authentication zone 112 set for the server 115, the information processing device 101 performs the authentication processing (gait authentication) for the user A. When the authentication processing is successful, the authentication processing unit 19 holds information indicating that the user A has been successfully authenticated for the authentication zone 112. It is assumed that the successful authentication processing for the user A is effective for a period during which the user is located in the authentication zone 112. The user A walks in the authentication zone even after the authentication processing is successful, and meanwhile, receives from the agent service (server 115) a message to recommend the purchase of a product (milk, for example) by push notification.

The user A expresses an intention to purchase the product, and the information processing device 101 detects the user's purchase intention using the voice recognition function of the input unit 102. The information processing device 101 determines that it is necessary to perform authentication processing, and checks whether the user A is located in an authenticated authentication zone based on the position information of user A. Since the user A is located in an authenticated authentication zone, a message of successful authentication is transmitted to the server 115. When receiving the message of successful authentication, the server 115 completes the payment processing to purchase the product.

Fig. 14 is a flowchart of an operation of the information processing device 101 according to Specific example 2. The position determination unit 14 determines based on the position information of the user whether or not the position condition is satisfied, that is, whether the user is located in the authentication zone (S401). When the user is located in the authentication zone, the authentication processing unit 19 performs authentication processing for the user based on the walking feature of the user using the sensor data and based on the walking model corresponding to the authentication zone in which the user is located (S402). When the authentication processing is successful, the authentication processing unit 19 holds information indicating that the user has been successfully authenticated for the current authentication zone. If the authentication processing fails, the processing ends. The output unit 103 may output information indicating that the authentication processing failed. After the authentication processing is successful, when the communication unit 20 receives the message to recommend the purchase of the product from the agent service (server 115) (S403), the output unit 103 outputs the received message. After confirming the message, the user uses the input unit 102 to express an intention to purchase it (S404). When the authentication processing unit 19 confirms that the user is located in the authenticated authentication zone (S405), the communication unit 20 transmits a message to notify the server 115 of product purchase and successful authentication (S406). When receiving the message, the server 115 performs payment processing for the user A to purchase the product. If it is determined in step S405 that the user is not located in the authenticated authentication zone, authentication processing is performed again in the same manner as in step S402 (S407). Specifically, the authentication processing unit 19 performs authentication processing for the user based on the walking feature of the user using the sensor data and based on the walking model corresponding to the authentication zone in which the user is located. If the authentication processing is successful, the processing proceeds to step S406. If the authentication fails, the processing ends.

According to Specific example 2, the user is authenticated in advance, and if the user has been authenticated successfully by the authentication processing, the effect of the authentication processing still remains within the authentication zone in which the user has been successfully authenticated by the authentication processing. If a request is made that requires authentication processing (for example, a request for product purchase and payment processing) while the effect of the authentication processing still remains, the authentication processing again is not performed. The authentication processing is regarded as being successful, and a message to notify that the authentication is successful is transmitted. This makes it possible to complete processing to the request quickly.

In the above description, the effect of the authentication processing for the user remains only within the authentication zone in which the authentication processing is performed. However, other variations are possible. For example, after the successful authentication processing, the effect of the authentication processing may remain within a certain period of time (for example, within 10 minutes) or within a certain distance (for example, within 1 km). Other methods may define a range in which the effect of the authentication processing remains.

### (Second embodiment)

Fig. 15 is a block diagram of an information processing device 101 according to a second embodiment. A route creation unit 41, an information calculation unit 42, and a data processing unit 43 are added to the information processing device 101 of Fig. 1. The same parts as those in Fig. 1 are designated by the same reference numerals, and detailed description thereof will be omitted. A configuration in which the route creation unit 41, the information calculation unit 42, and the data processing unit 43 are added to the information processing device 131 of Fig. 9 is also possible.

The user uses the input unit 102 to set a destination including an authentication application device. The route creation unit 41 creates a route from the current position of the user to the destination. If a route app linked with map data is installed in the information processing device 101, the route creation unit 41 may use the function of the map app to create a route, or may use a route server on the communication network.

For a case where there are a plurality of routes to the destination, the route creation unit 41 may create a route that the user has used most in the past, or create two or more routes in descending order of the number of times the user has used them in the past. One route may be created in order of shortest distance to the destination, or one or more routes may be created based on other criteria. A DB storing routes that the user has used in the past may be installed in the information processing device 101, or routes that the user has used in the past may be acquired from an external route server.

The information calculation unit 42 identifies, based on the authentication result DB 23, the authentication zones included in the route(s) created by the route creation unit 41, and calculates statistical information of scores calculated in the past for the identified authentication zones. Examples of statistical information include, but are not limited to, statistical values such as maximum value, average value, median value, and minimum value (the same applies hereinafter). Here, a case of calculating an average value will be described as an example.

The data processing unit 43 creates data including the route(s) created by the route creation unit 41, the authentication zone(s), and the statistical value(s). The data processing unit 43 provides the data to the output unit 103. The output unit 103 superimposes the provided data on map information to display it on a screen.

Fig. 16 illustrates a display example of a screen of the information processing device 101. A route R1 from a starting position C to a destination G and an authentication zone K1 included in the route R1 are illustrated. The authentication zone K1 is from a starting point S1 to the destination G. In this example, the route with the highest statistical value has been created. In the vicinity of the authentication zone K1, an average value of 0.98 is displayed as a statistical value of past scores. In a case where the authentication processing has been performed for the authentication zone K1 multiple times to determine whether the authentication is successful or failed, a representative value (maximum value or average value, etc.) of the scores of the attempts of authentication processing can be calculated, and the statistical value of the representative value can be used.

Fig. 17 illustrates another display example of a screen of the information processing device 101. In this example, two routes R1 and R2 with high statistical values are created. For routes R1 and R2, authentication zones K1 and K2 and the statistical values of scores 0.98 and 0.88 are displayed. An authentication zone K2 is from a starting point S2 to the destination G. The routes R1 and R2 may be displayed in different style (color, line type, etc.) so that the user can easily identify the route with the highest statistical value. The user selects the route with the highest statistical value, so that the success rate of authentication processing can be increased.

Fig. 18 illustrates still another display example of a screen. For the current position H1 of the user, the score 0.91 is displayed in an inverted triangle mark. The authentication processing is performed for the authentication zone K1 at regular time intervals, and the maximum score from the starting position S 1 of the authentication zone K1 to the current position H1, 0.91 is displayed. In other words, the maximum score for the user is displayed in real time. The maximum value is an example, and another value such as an average, a minimum, or a median may be displayed. The user checks the real-time score, for example, for a low score, the user can check whether the user is taking a motion that is different from usual, and change the motion to increase the score. If the score is less than a threshold value, a warning message such as "The current conditions will make the authentication processing unsuccessful" may be displayed on a screen or output by voice. Alternatively, the user may be notified that the score is equal to or less than or greater than the threshold value by using a specific color for the score display color or background color.

### (Modification example)

For a route to the destination, the scores of other users may be acquired to display the user with the highest score. For example, the data processing unit 43 receives, from the information processing device of another user or a server that manages a plurality of users via the communication unit 20, data for the target authentication zone which includes the maximum score of the other user and the identification information of the other user. The identification information of the user may be, for example, a user name such as a handle name. The maximum value is an example, and another value such as an average value, a median value, or a minimum value may be used. The data processing unit 43 identifies the user who has had the highest score in the past among the user of interest and the other users, and causes the output unit 103 to display the identification information of the identified user. This makes it possible to provide a game in which users compete for a high score.

Fig. 19 illustrates a display example of a screen according to the present modification example. The user name "Tom" is displayed together with the score because Tom has had the highest score in the past for the route R1. Although the display of the authentication zone and the starting position of the authentication zone is omitted, the authentication zone may be displayed.

In Fig. 20, (A) illustrates other display examples of a screen according to the present modification example. In a case where there are a plurality of routes to the destination, the user name and score of a user with the highest score are displayed for each route. As an example, a user with the highest score is selected from among a plurality of users for each route, and the user name and score of the selected user are displayed. In the present example, Tom has the highest score for a route R1, Jack has the highest score for a route R3, and Mary has the highest score for a route R4. A game may be played to compete for the highest score for each route. For example, a game can be provided in which a user with the highest score for each route is allowed to register the route as "my gate way".

In Fig. 20, (B) illustrates an example of ranking in descending order of score with respect to the case of (A) in Fig. 20. Since Tom, Jack, and Mary have the highest scores in that order, Tom is ranked 1st, Jack is ranked 2nd, and Mary is ranked 3rd. The maximum score for each route and the ranking of the users among routes can also be used as a measure to determine which route is most likely to be authenticated successfully.

### (Third embodiment)

Fig. 21 is a block diagram of an information processing device 101 according to a third embodiment. An information calculation unit 42 and a route selection unit 51 are added to the information processing device 101 of Fig. 1. The same parts as those in Fig. 1 or Fig. 15 are designated by the same reference numerals, and detailed description thereof will be omitted. A configuration in which the information calculation unit 42 and the route selection unit 51 are added to the information processing device 131 of Fig. 9 is also possible.

When it becomes necessary to perform authentication processing for a user, the route selection unit 51 selects a route with a high probability of successful authentication processing as a recommended route. The route selection unit 51 provides the output unit 103 with data indicating the recommended route. The data indicating the recommended route may include data for guiding a route change to the recommended route. The output unit 103 superimposes the recommended route on map information to displays it on a screen. A voice guidance message to guide the user to the recommended route may be output via the output unit 103 or a wearable device. The user walks on the recommended route, so that when it becomes necessary to perform authentication processing, it is possible to succeed in the authentication processing quickly with a high probability.

In order to select a recommended route, the route selection unit 51 selects, for example, a route with the highest statistical value of scores (maximum value, average value, etc.) or a threshold value or more from among a plurality of routes to the user's destination. To this end, the route selection unit 51 requests the information calculation unit 42 to calculate statistical values of scores for a plurality of routes. If the user's destination is not set, a recommended route may be selected from among a plurality of routes close to the current position of the user.

The information calculation unit 42 identifies past scores of authentication zone(s) included in each route based on the authentication result DB 23, and calculates a statistical value (maximum value, average value, etc.) of the identified scores. The statistical value of the scores calculated for each route is provided to the route selection unit 51. For a case where one route includes a plurality of authentication zones, any authentication zone (for example, the authentication zone closest to the current position of the user) may be targeted. Alternatively, a statistical value may be calculated for each authentication zone, and the maximum value or average of the calculated statistical values may be used.

The route selection unit 51 selects a recommended route based on the statistical value of the scores of each route provided by the information calculation unit 42. When the current route of the user is different from the recommended route, the route selection unit 51 may notify the user of voice information for guiding the user to change the route to the recommended route via the output unit 103 or a hearable device. As an example of guiding the user, the user may be informed of an output such as "Turn right at next corner" or "Walk along the recommended route displayed on the screen".

As an example of a case where it becomes necessary to perform authentication processing for a user, there may be a case where the information processing device 101 receives a message to recommend the purchase of a product from a server that provides an agent service on a communication network, and the user expresses an intention to purchase the product. The information processing device 101 needs to perform authentication processing for the user to complete the purchase of the product (that is, complete the payment). A specific example will be described with reference to Fig. 22.

Fig. 22 illustrates a specific example in the present embodiment. A user A is walking and wears a hearable device as a wearable device including the information processing device 101 on the ear. As an agent service, the server 115 deployed on the communication network transmits a message to recommend the purchase of a product (pushes a notification) to the information processing device 101 of the user A walking. In the example as illustrated, the message "Short of milk. Do you want to buy?" is transmitted to the information processing device 101.

The user A confirms the message from server 115 by voice from the output unit 103 (speaker) of the information processing device 101. The user A inputs the message "Yes" from the input unit 102 (microphone) of the information processing device 101. The information processing device 101 determines that the user A has expressed an intention to purchase milk by voice recognition of the message. The information processing device 101 determines that it is necessary to perform recognition processing for the user A, and selects a recommended route to encourage the user to walk. For example, a route with the highest score statistic (maximum value, average value, etc.) is taken as the recommended route. The information processing device 101 outputs a message to guide the user to the recommended route. In the example as illustrated, since the recommended route exists in the direction where the user turns right at the next corner, the user is notified of the message "Turn right at next corner and go straight ahead". The user A turns right at the next corner in accordance with the message guidance. When the information processing device 101 detects that the user A has entered the authentication zone 112 set for the server 115, the information processing device 101 performs the authentication processing (gait authentication) for the user A. When the authentication processing is successful, the communication unit 20 transmits a message to notify the server 115 of product purchase and successful authentication. When receiving the message, the server 115 completes the payment processing to purchase the product.

The example of Fig. 22 is a case where the information processing device 101 is a hearable device. By contrast, a specific example will now be described in which the information processing device 101 is a smart phone.

Fig. 23 illustrates a display example of a screen of the information processing device 101. A user is walking on a route R5 from a starting position C to a destination G while referring to the screen illustrated in Fig. 22, for example. When the user is at a position H2, the user receives a message to recommend the purchase of a product from a server that provides an agent service. When the user expresses a purchase intention using the input unit 102, the route selection unit 51 selects a route R1 with the highest statistical value of scores (maximum value, average value, etc.) as a recommended route. The route selection unit 51 notifies the user of a message to guide the user to change the route to the route R1. For example, since the route R1 exists on the right side of the user, the user is notified of a voice or text message of "Turn right at next corner". Further, a bypass route R7 for traveling to the route R1 is displayed on the screen. The user travels to the route R1 via the bypass route R7. When the user enters an authentication zone K1 on the route R1, the information processing device 101 performs authentication processing (gait authentication) for the user A. If the authentication processing is successful, a message including product purchase and successful authentication is transmitted to the server 115. When receiving the message, the server 115 completes the payment processing for the user A to purchase the product.

Fig. 24 is a flowchart of an operation example of the information processing device 101 according to the third embodiment. The communication unit 20 receives a message to recommend the purchase of a product from the server 115 (S501). The output unit 103 outputs the received message by voice or text, and the user who has confirmed the message uses the input unit 102 to express an intention to purchase it (S502). The route selection unit 51 selects, as a recommended route, a route with the highest statistical value of scores (maximum value, average value, etc.) or a threshold value or more from among a plurality of routes to the user's destination (S503). The route selection unit 51 notifies the user of a message to guide the user to change the route to the selected recommended route via the output unit 103 or the wearable device. If the route on which the user is currently walking matches the recommended route, the guidance to the recommended route may be not made. Alternatively, the user may be notified of a message to recommend that the user continue walking without changing the current walking route. When the information processing device 101 detects that the user A has entered the authentication zone 112 set for the server 115, the information processing device 101 performs the authentication processing (gait authentication) for the user A. If the authentication processing is successful, a message including product purchase and successful authentication is transmitted to the server 115 via the communication unit 20. When receiving the message, the server 115 completes the payment processing for the user A to purchase the product.

As described above, according to the third embodiment, after the user expresses an intention to purchase a product, the user only walks on the recommended route guided by the information processing device 101, so that it is possible to succeed in the personal authentication quickly with a high success rate.

### (Hardware configuration)

Fig. 25 illustrates an example of a hardware configuration of the information processing device 101 illustrated in Fig. 1, Fig. 15, or Fig. 21. The information processing device 101 is constituted of a computer device 200. The information processing device 131 and the terminal device 141 illustrated in Fig. 9 are configured like this. The computer device 200 includes a CPU 201, an input device 202, an output device 203, a communication device 204, a main storage device 205, and an external storage device 206, and these components are connected to each other by a bus 207.

The CPU (Central Processing Unit) 201 executes an information processing program, which is a computer program, on the main storage device 205. The information processing program is a program that implements each of the above-described functional components of the information processing device 101. The information processing program may be implemented by a combination of a plurality of programs and scripts instead of a single program. The respective functional components are implemented by the CPU 201 executing the information processing program.

The input device 202 is a circuit for inputting an operation signal from an input device such as a touch panel, a microphone, a sensor, a keyboard, and a mouse to the information processing device 101.

The output device 203 outputs data from the information processing device 101. The output device 203 is, but is not limited to, a display device, a sound output device (speaker), a vibration device, a light emitting device, or the like. Data output from the computer device 200 can be output from the output device 203.

The communication device 204 is a circuit used by the information processing device 101 to communicate with an external device in a wireless or wired manner. Data can be input from an external device via the communication device 204. The data input from the external device can be stored in the main storage device 205 or the external storage device 206.

The main storage device 205 stores the information processing program, data necessary for executing the information processing program, data created by executing the information processing program, and the like. The information processing program is loaded into the main storage device 205 to be executed thereon. Examples of the main storage device 205 include, but not limited to, a RAM, a DRAM, and an SRAM. A database within the information processing device 101 may be constructed on the main storage device 205.

The external storage device 206 stores the information processing program, data necessary for executing the information processing program, data generated by executing the information processing program, and the like. The information processing program and the data are read into the main storage device 205 to execute the information processing program. Examples of the external storage device 206 include, but not limited to, a hard disk, an optical disk, a non-volatile memory (for example, a flash memory), and a magnetic tape. The database in the information processing device 101 may be constructed on the external storage device 206.

The information processing program may be installed in advance in the computer device 200 or stored in a recording medium such as a CD-ROM. The information processing program may be uploaded onto the Internet.

The information processing device 101 may be configured of a single computer device 200 or configured as a system made up of a plurality of computer devices 200 which are connected to each other.

It is to be understood that the embodiments described above merely represent examples embodying the present disclosure and that the present disclosure can be implemented in various other modes. For example, various modifications, replacements, omissions, or combinations thereof can be made without departing from the spirit and scope of the present disclosure. Modes representing such modifications, replacements, omissions, and the like also fall within the scope of the present disclosure as well as the scopes of the invention as set forth in the scope of claims and equivalents thereof.

In addition, the advantageous effects of the present disclosure described herein are merely exemplary and other advantageous effects may be produced.

The present disclosure can also be configured as follows:
[Item 1] An information processing device includes:
   a position acquisition unit that acquires position information of a user;
   a feature amount calculation unit that calculates a feature amount of motion of the user based on sensor data detected by at least one sensor device; and
   an authentication processing unit that performs authentication processing for the user based on an authentication model corresponding to the position information and based on the feature amount.
[Item 2] The information processing device according to Item 1, wherein the position information indicates a zone in which the user is located.
[Item 3] The information processing device according to Item 1 or Item 2, including an environment acquisition unit that acquires environmental information of the user based on a sensor device that detects environment of the user or from an external server, wherein the authentication processing unit uses an authentication model corresponding to the environmental information and the position information.
[Item 4] The information processing device according to Item 3, wherein the environmental information includes information on at least one of conditions of a road surface on which the user is located, weather at a place where the user is located, and footwear worn by the user.
[Item 5] The information processing device according to any one of Item 1 to Item 4, wherein the feature amount is based on at least one of acceleration information, angular velocity information, velocity information, and biometric information of the user.
[Item 6] The information processing device according to any one of Item 1 to Item 5, including a communication unit that transmits result information indicating that the authentication processing is successful or failed to an authentication application device that performs processing according to whether the authentication processing is successful or failed.
[Item 7] The information processing device according to Item 2, wherein
   after the successful authentication processing, a result of the authentication processing is effective for a period during which the user remains in the zone in which the user has been successfully authenticated by the authentication processing or for a certain period of time, and
   when the authentication processing needs to be performed while the result of the authentication processing is effective, the authentication processing unit determines the authentication processing to be successful without performing the authentication processing.
[Item 8] The information processing device according to Item 2, including a data processing unit that provides, to a display device visible to the user, data in which a zone is specified for which the authentication processing is to be performed for a route on which the user is traveling.
[Item 9] The information processing device according to any one of Item 1 to Item 8, wherein
   the authentication processing unit calculates a score for the authentication processing and determines based on the score whether the authentication processing is successful or failed, the information processing device includes
   an information calculation unit that calculates statistical information of scores calculated for the route traveled by the user; and
   a data processing unit that provides data including the route and the statistical information to a display device that displays the data.
[Item 10] The information processing device according to any one of Item 1 to Item 9, wherein
   the authentication processing unit calculates a score for the authentication processing, and the information processing device includes a data processing unit that provides data in which the score is associated with the position of the user to a display device that displays the data.
[Item 11] The information processing device according to any one of Item 1 to Item 10, wherein the data processing unit provides data in which identification information of a plurality of users and the score are associated with the route to a display device that displays the data.
[Item 12] The information processing device according to any one of Item 1 to Item 11, wherein
   the authentication processing unit calculates a score for the authentication processing, and the information processing device includes
   an information calculation unit that calculates statistical information of scores calculated for the route traveled by the user; and
   a route selection unit that selects a recommended route which is a route recommended to the user, based on the statistical information, and provides data indicating the recommended route to a display device that displays the data.
[Item 13] The information processing device according to Item 12, wherein the route selection unit provides data for guiding the user to the recommended route to a display device that displays the data or a sound output device that outputs the data by voice.
[Item 14] The information processing device according to Item 13, wherein the route selection unit selects the recommended route when the authentication processing needs to be performed.
[Item 15] The information processing device according to Item 7, wherein the specific processing includes processing related to at least one of fee payment processing, gate unlocking processing, key unlocking processing, product provision processing, and service provision processing.
[Item 16] The information processing device according to any one of Item 1 to Item 15, wherein the position acquisition unit acquires the position information of the user from at least one of the sensor device and an external device disposed for a route on which the user travels.
[Item 17] The information processing device according to any one of Item 1 to Item 16, including a model creation unit that creates an authentication model for the user based on the feature amount calculated by the feature amount calculation unit and associates the authentication model with the position information acquired by the position acquisition unit in a database, wherein the authentication processing unit identifies an authentication model associated with the position information from the database, and uses the identified authentication model to perform the authentication processing for the user.
[Item 18] The information processing device according to any one of Item 1 to Item 17, wherein the feature amount calculation unit calculates the feature amount based on the sensor data detected by the sensor device while the user is walking or running.
[Item 19] An information processing method including:
   acquiring position information of a user;
   calculating a feature amount of motion of the user based on sensor data detected by at least one sensor device; and
   performing authentication processing for the user based on an authentication model corresponding to the position information and based on the feature amount.
[Item 20] A computer program for causing a computer to execute the steps of:
   acquiring position information of a user;
   calculating a feature amount of motion of the user based on sensor data detected by at least one sensor device; and
   performing authentication processing for the user based on an authentication model corresponding to the position information and based on the feature amount.

### [Reference Signs List]

- 11: Position detection unit
- 12: Position reception unit
- 13: Position acquisition unit
- 14: Position determination unit
- 15: Sensor data acquisition unit
- 16: Walking feature calculation unit
- 17: Model creation unit
- 19: Authentication processing unit
- 20, 28: Communication unit
- 21: Antenna
- 22: Walking model database (DB)
- 23: Authentication result DB
- 24: Zone information DB
- 25: Learning DB
- 41: Route creation unit
- 42: Information calculation unit
- 43: Data processing unit
- 51: Route selection unit
- 101, 131: Information processing device
- 102: Input unit
- 103: Output unit
- 111: Authentication application device
- 112, 113: Authentication zone
- 114: Communication network
- 115: Server
- 200: Computer device
- 201: CPU
- 202: Input device
- 203: Output device
- 204: Communication device
- 205: Main storage device
- 206: External storage device
- 207: Bus

## Claims

1. An information processing device, comprising:
a position acquisition unit that acquires position information of a user;
a feature amount calculation unit that calculates a feature amount of motion of the user based on sensor data detected by at least one sensor device; and
an authentication processing unit that performs authentication processing for the user based on an authentication model corresponding to the position information and based on the feature amount.

2. The information processing device according to claim 1, wherein the position information indicates a zone in which the user is located.

3. The information processing device according to claim 1, comprising an environment acquisition unit that acquires environmental information of the user based on a sensor device that detects environment of the user or from an external server, wherein
the authentication processing unit uses an authentication model corresponding to the environmental information and the position information.

4. The information processing device according to claim 3, wherein the environmental information includes information on at least one of conditions of a road surface on which the user is located, weather at a place where the user is located, and footwear worn by the user.

5. The information processing device according to claim 1, wherein the feature amount is based on at least one of acceleration information, angular velocity information, velocity information, and biometric information of the user.

6. The information processing device according to claim 1, comprising a communication unit that transmits result information indicating that the authentication processing is successful or failed to an authentication application device that performs processing according to whether the authentication processing is successful or failed.

7. The information processing device according to claim 2, wherein
after the successful authentication processing, a result of the authentication processing is effective for a period during which the user remains in the zone in which the user has been successfully authenticated by the authentication processing or for a certain period of time, and
when the authentication processing needs to be performed while the result of the authentication processing is effective, the authentication processing unit determines the authentication processing to be successful without performing the authentication processing.

8. The information processing device according to claim 2, comprising a data processing unit that provides, to a display device visible to the user, data in which a zone is specified for which the authentication processing is to be performed for a route on which the user is traveling.

9. The information processing device according to claim 1, wherein
the authentication processing unit calculates a score for the authentication processing and determines based on the score whether the authentication processing is successful or failed, the information processing device comprises:
an information calculation unit that calculates statistical information of scores calculated for the route traveled by the user; and
a data processing unit that provides data including the route and the statistical information to a display device that displays the data.

10. The information processing device according to claim 1, wherein
the authentication processing unit calculates a score for the authentication processing, and
the information processing device comprises a data processing unit that provides data in which the score is associated with the position of the user to a display device that displays the data.

11. The information processing device according to claim 10, wherein the data processing unit provides data in which identification information of the user and the score are associated with the route to a display device that displays the data.

12. The information processing device according to claim 1, wherein
the authentication processing unit calculates a score for the authentication processing, and
the information processing device comprises:
an information calculation unit that calculates statistical information of scores calculated for the route traveled by the user; and
a route selection unit that selects a recommended route which is a route recommended to the user, based on the statistical information, and provides data indicating the recommended route to a display device that displays the data.

13. The information processing device according to claim 12, wherein the route selection unit provides data for guiding the user to the recommended route to a display device that displays the data or a sound output device that outputs the data by voice.

14. The information processing device according to claim 13, wherein the route selection unit selects the recommended route when the authentication processing needs to be performed.

15. The information processing device according to claim 7, wherein the specific processing includes processing related to at least one of fee payment processing, gate unlocking processing, key unlocking processing, product provision processing, and service provision processing.

16. The information processing device according to claim 1, wherein the position acquisition unit acquires the position information of the user from at least one of the sensor device and an external device disposed for a route on which the user travels.

17. The information processing device according to claim 1, comprising a model creation unit that creates an authentication model for the user based on the feature amount calculated by the feature amount calculation unit and associates the authentication model with the position information acquired by the position acquisition unit in a database, wherein the authentication processing unit identifies an authentication model associated with the position information from the database, and uses the identified authentication model to perform the authentication processing for the user.

18. The information processing device according to claim 1, wherein the feature amount calculation unit calculates the feature amount based on the sensor data detected by the sensor device while the user is walking or running.

19. An information processing method comprising:
acquiring position information of a user;
calculating a feature amount of motion of the user based on sensor data detected by at least one sensor device; and
performing authentication processing for the user based on an authentication model corresponding to the position information and based on the feature amount.

20. A computer program for causing a computer to execute the steps of:
acquiring position information of a user;
calculating a feature amount of motion of the user based on sensor data detected by at least one sensor device; and
performing authentication processing for the user based on an authentication model corresponding to the position information and based on the feature amount.
